# EUROPÄISCHE PATENTSCHRIFT

(11) **EP 3 602 996 B1**
(45) Veröffentlichungstag und Bekanntmachung des Hinweises auf die Patenterteilung: **10.08.2022**
(21) Anmeldenummer: 18707693.0
(22) Anmeldetag: 23.02.2018
(51) Int. Cl.: H04W 12/02, H04W 12/06, H04L 9/40

(54) **VERFAHREN UND SYSTEM ZUR VERHALTENSBASIERTEN AUTHENTIFIZIERUNG EINES NUTZERS**
METHOD AND SYSTEM FOR THE BEHAVIOUR-BASED AUTHENTICATION OF A USER
PROCÉDÉ ET SYSTÈME POUR L'AUTHENTIFICATION D'UN UTILISATEUR BASÉE SUR LE COMPORTEMENT

(30) Priorität: 20.03.2017 DE 102017204626
(43) Veröffentlichungstag der Anmeldung: 05.02.2020
(73) Patentinhaber: Bundesdruckerei GmbH, 10969 Berlin (DE)
(72) Erfinder: PAESCHKE, Manfred, 16348 Wandlitz (DE); SCHNJAKIN, Maxim, 10245 Berlin (DE)
(74) Vertreter: Richardt Patentanwälte PartG mbB
(86) Internationale Anmeldenummer: PCT/EP2018/054553
(87) Internationale Veröffentlichungsnummer: WO 2018/172016

(56) Entgegenhaltungen:
- WO-A1-2015/127256
- US-A1- 2014 289 833

## Beschreibung

Die Erfindung betrifft ein Verfahren und ein System zur verhaltensbasierten Authentifizierung eines Nutzers gegenüber einem Server mittels eines mobilen, tragbaren Kommunikationssystems.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht sie sich zu merken. Fingerabdrucksensoren haben den Nachteil, dass der Nutzer extra einen vorbestimmten Finger auf diesem platzieren muss. Hält er das mobile, tragbare Kommunikationssysteme in der falschen Hand kann der Fingerabdrucksensoren den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Die US 2014/289833 A1 beschreibt ein System, eine Vorrichtung, ein Verfahren und ein maschinenlesbares Medium, zum Ausführen von Authentifizierungstechniken und zugehörigen Anwendungen. Das Verfahren umfasst: Empfangen einer Richtlinie, die einen Satz akzeptabler Authentifizierungsfähigkeiten identifiziert; Bestimmen eines Satzes von Clientauthentifizierungsfähigkeiten; und Filtern des Satzes akzeptabler Authentifizierungsfähigkeiten basierend auf dem bestimmten Satz von Clientauthentifizierungsfähigkeiten, um einen gefilterten Satz von einer oder mehreren Authentifizierungsfähigkeiten zum Authentifizieren eines Nutzers des Clients zu erhalten.

Die US 2014/089673 A1 beschreibt ein Gerät und ein Verfahren zum Verwenden eines tragbaren ("wearable") Geräts mit Sensoren zum Identifizieren eines Trägers und Erzeugen einer biometrischen Kennung zu Sicherheits- und Authentifizierungszwecke. Ein Aktivitätsmuster basierend auf einer ersten Aktivität und einer zweiten Aktivität wird bestimmt, Daten, welche das Aktivitätsmuster darstellen, werden mit Übereinstimmungsdaten, die einer gewohnheitsmäßigen Aktivität zugeordnet sind, verglichen und eine Identität eines Nutzers, der dem tragbaren Gerät zugeordnet ist, wird authentifiziert.

Der Erfindung liegt demgegenüber die Aufgabe zugrunde, ein verbessertes Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen sind in den abhängigen Patentansprüchen angegeben.

Die Erfindung schlägt ein Verfahren und ein System zur verhaltensbasierten Authentifikation eines Nutzers vor, welche eine Authentifizierung ohne PIN oder Passwort ermöglichen. Die Grundlage der Authentifizierung ist ein individuelles intrinsisches Verhalten des Nutzers, welches durch eine Verhaltensweise oder eine Verhaltensgewohnheit des Nutzers definiert ist. Die verhaltensbasierte Authentifikation ermöglicht es dem Nutzer dadurch Zugriff auf sein mobiles, tragbares Kommunikationssystem zu erlangen, indem er sich so verhält, wie er es gewohnt ist. Der Nutzer muss sich daher kein Passwort, keine PIN, keine spezielle Geste oder ähnliche Authentifizierungsmittel merken. Alle grundlegenden Daten werden von dem mobilen, tragbaren Kommunikationssystem erfasst und alle grundlegenden Operationen werden von dem mobilen, tragbaren Kommunikationssystem beziehungsweise seinem

Prozessor ausgeführt. Insbesondere sensible Daten, welche ein persönliches Verhalten des Nutzers wiederspiegeln, verbleiben ausschließlich in einem internen Speicher des mobilen, tragbaren Kommunikationssystems.

Das Verfahren zur Authentifizierung eines Nutzers eines mobilen, tragbaren Kommunikationssystems gegenüber einem Server mittels einer verhaltensbasierten Authentifizierung umfasst nach Ausführungsformen die folgenden Schritte:
- Empfangen von mindestens einem Klassifikationsergebnis durch den Server von dem mobilen, tragbaren Kommunikationssystem,
- Auswerten des mindestens einen Klassifikationsergebnisses gemäß einem vorgegebenen Prüfungskriterium durch den Server,
- Ansteuern einer Vorrichtung mittels eines Steuersignals durch den Server.

Geräte mit einer sogenannten Smart-Funktion sind oftmals über mobile, tragbare Kommunikationssysteme ansteuerbar. Das mobile, tragbare Kommunikationssystem dient dabei als eine Art Schlüssel, der den Nutzer dazu befähigt Smart-Geräte anzusteuern. Die Authentifizierung des Nutzers gegenüber den Geräten kann dabei über die Authentifizierung des Nutzers gegenüber dem mobilen, tragbaren Kommunikationssystem oder gegenüber dem Gerät selbst erfolgen. Bei der Authentifizierung des Nutzers gegenüber dem mobilen, tragbaren Kommunikationssystem ist das mobile, tragbare Kommunikationssystem mit dem Smart-Gerät verbunden, sodass eine Authentifizierung des Nutzers gegenüber dem mobilen, tragbaren Kommunikationssystem gleichzeitig eine Authentifizierung gegenüber dem Smart-Gerät darstellt, ohne dass der Nutzer sich explizit gegenüber dem Smart-Gerät authentifizieren muss. Findet eine Authentifizierung des Nutzers gegenüber dem Smart-Gerät über das mobile, tragbare Kommunikationssystem statt so werden beispielsweise über das mobile, tragbare Kommunikationssystem ein Passwort, eine PIN oder ähnliche Authentifizierungsmittel eingegeben, die dem Nutzer den Zugriff auf das Smart-Gerät ermöglichen.

Ein solches Smart-Gerät bzw. eine Smart-Vorrichtung im allgemeinen kann beispielsweise, ohne darauf beschränkt zu sein, ein Fahrzeug, ein Flugzeug, eine Maschine, insbesondere eine Waschmaschine, einen Trockner, einen Kühlschrank oder ähnliche Haushaltsgeräte sein sowie ein Gerät eines Smart-Home-Systems, wie etwa Beleuchtung, Schließmittel, Haustür, Alarmanlage, Klimaanlage, Heizung, Audioanlage(n), Video- bzw. Fernsehanlage(n), und/oder einen PC umfassen, welche der Nutzer beispielsweise zu Hause über das Internet, ein Intranet oder individuelle Funkverbindungen mittels dem mobilen, tragbaren Kommunikationssystem ansteuert.

Eine Vorrichtung kann nach Ausführungsformen eine Smart-Vorrichtung umfassen, welche ferner als System ausgebildet sein kann. Eine Smart-Vorrichtung umfasst nach Ausführungsformen eine elektrische, elektronische, mechanische oder elektromechanische Vorrichtung und einen Server, wobei der Server dazu ausgebildet ist, mit der Vorrichtung und einem mobilen, tragbaren Kommunikationssystem zu kommunizieren, sodass die Vorrichtung durch das mobile, tragbare Kommunikationssystem über den Server angesteuert werden kann.

Das vorgeschlagene System umfasst nach einer Ausführungsform mindestens eine Vorrichtung und einen Server, wobei der Server eine erste Schnittstelle und eine zweite Schnittstelle aufweist, wobei die erste Schnittstelle konfiguriert ist mit mindestens einer ansteuerbaren Vorrichtung zu kommunizieren und die zweite Schnittstelle dazu ausgebildet ist, mit einem mobilen, tragbaren Kommunikationssystem zu kommunizieren.

Durch die Kommunikation des mobilen, tragbaren Kommunikationssystems mit dem Server, welcher mit mindestens einer Vorrichtung kommunikativ verbunden ist, ergibt sich vorteilhafterweise, dass ein Server mit mehreren Vorrichtungen verbunden sein kann. Das mobile, tragbare Kommunikationssystem muss dann lediglich eine Verbindung zu dem Server aufbauen, um die mindestens eine Vorrichtung mittels des Servers ansteuern zu können. In einer Ausführungsform kann der Server beispielsweise, ohne darauf beschränkt zu sein, als PC oder Router ausgebildet sein.

Nach einer weiteren Ausführungsform ist eine Mehrzahl von Vorrichtungen vorgesehen, wobei jede der Vorrichtungen mit einem eigenen Server ausgestattet ist, sodass das mobile, tragbare Kommunikationssystem mit jeweils einem Server für jede ansteuerbare Vorrichtung verbunden wird. Ein Server kann gemäß einer solchen Ausführungsform als Bauteil der Vorrichtung ausgebildet sein.

Durch das Aufweisen eines Servers für jede ansteuerbare Vorrichtung ergibt sich in vorteilhafter Weise, dass auf einen zentralen Server, welcher beispielsweise als PC oder Router ausgebildet sein kann, verzichtet werden kann. Ferner kann eine dezentralisierte Ansteuerung von Vorrichtungen einen erhöhten Ausfallschutz bewirken. Kann eine Vorrichtung, bzw. ein Server beispielsweise aufgrund einer Fehlfunktion des Servers nicht angesteuert werden, so sind weitere Vorrichtungen davon unabhängig und können ordnungsgemäß betrieben werden. Ferner sind durch die reduzierte Anzahl von Verbindung des Servers zu Vorrichtungen und dem mobilen, tragbaren Kommunikationssystem die Anforderungen an Hard- und Software des Servers geringer. Dadurch lässt sich der Server einer Vorrichtung leichter warten, austauschen und/oder günstiger herstellen.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen auf seine eigene Art und Weise aus. Somit kann einem bestimmten Nutzer eines mobilen, tragbaren Kommunikationssystems ein ganz bestimmtes, charakteristisches grobmotorisches Bewegungsprofil zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare Kommunikationssystem ist ferner mit einem Klassifikationsmodul ausgestattet, welches dazu trainiert ist, die Bewegungsmuster des Nutzers zu erkennen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welches zuvor ebenfalls trainiert wurde.

Bei einer verhaltensbasierten Authentifizierung eines Nutzers wird zwischen zwei Typen von Nutzern unterschieden. Einerseits ist der in dem System registrierte Nutzer derjenige Nutzer, den das System erkennen soll. Andererseits ist der aktuelle Nutzer derjenige Nutzer, der das System aktuell bedienen bzw. benutzen möchte, wofür er sich authentifizieren muss. Kann der aktuelle Nutzer mit dem in dem System registrierten Nutzer durch den Authentifizierungsprozess identifiziert werden, so wird dem aktuellen Nutzer der Zugriff auf das System gewährt. Stimmt der aktuelle Nutzer nicht mit dem in dem System registrierten Nutzer überein, so identifiziert das System den aktuellen Nutzer als eine andere, nicht nutzungsberechtigte Person und verweigert den Zugriff. Im Folgenden wird mit "der Nutzer" der aktuelle Nutzer des Systems bezeichnet. Ist der in dem System registrierte Nutzer gemeint, ist dies explizit als "der registrierte Nutzer" gekennzeichnet.

Ein mobiles, tragbares Kommunikationssystem kann ein einzelnes eigenständiges Gerät oder mehrere mechanisch und/oder kommunikativ miteinander verbundene Geräte umfassen. Ein solches mobiles, tragbares Kommunikationssystem kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung einer grobmotorischen Bewegung aufweisen.

Beispielhaft könnte ein mobiles, tragbares Kommunikationssystem ein Smartphone und eine Smart-Watch umfassen, wobei das Smartphone einen Sensor zur Erfassung der grobmotorischen Bewegung des Gehens aufweist und die Smart-Watch den Puls und den Blutdruck des Nutzers misst. Anhand eines Vergleichs der Daten des Nutzers und des registrierten Nutzers kann der Nutzer als der registrierte Nutzer identifiziert werden oder nicht.

Ein solches mobiles, tragbares Kommunikationssystem weist zur Ausführung der verhaltensbasierten Authentifizierung eines Nutzers mindestens einen Sensor zur Erfassung von Daten einer grobmotorischen Bewegung des Nutzers Daten, ein Grobmotorikklassifikationsmodul, ein Betriebssystem, einen Prozessor und einen internen Speicher auf. Der Sensor zur Erfassung der Daten ist dazu konzipiert, eine grobmotorische Bewegung des Nutzers zu erfassen. Das Grobmotorikklassifikationsmodul ist für die Klassifikation der Daten konfiguriert, auf das Erkennen einer grobmotorischen Bewegung des Nutzers trainiert, implementiert ein Maschinenlernverfahren und wird durch den Prozessor des mobilen, tragbaren Kommunikationssystems ausgeführt, wobei das Betriebssystem dazu in der Lage ist den Zugriff auf das mobile, tragbare Kommunikationssystem aufgrund des Erfolgs der Authentifizierung zu steuern.

Das durch das Grobmotorikklassifikationsmodul implementierte Maschinenlernverfahren bezeichnet ein Verfahren, mit dem das Grobmotorikklassifikationsmodul in der Lage ist, sich an den Nutzer des mobilen, tragbaren Kommunikationssystems anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen ist das Maschinenlernverfahren ein speziell für das maschinelle Lernen entwickelter Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Die verhaltensbasierte Authentifizierung eines Nutzers kann in zwei operative Abschnitte unterteilt werden. Abschnitt A umfasst ein wiederholtes Ausführen der folgenden Schritte:
- Erfassen der Daten durch den mindestens einen Sensor des mobilen, tragbaren Kommunikationssystems,
- Eingabe der Daten in das Grobmotorikklassifikationsmodul,
- Generieren mindestens eines ersten Konfidenzwertes durch das Grobmotorikklassifikationsmodul,
- Speichern des mindestens einen ersten Konfidenzwertes in dem Speicher des mobilen, tragbaren Kommunikationssystems und
- Trainieren des Grobmotorikklassifikationsmoduls mit den Daten des Nutzers, um das Grobmotorikklassifikationsmodul auf ein nutzerspezifisches grobmotorisches Bewegungsmuster zu trainieren unter der Voraussetzung, dass gemäß dem ersten Klassifikationsergebnis der Nutzer der im mobilen, tragbaren Kommunikationssystem registrierte Nutzer ist.

Diese Schritte werden wiederholt ausgeführt, wodurch fortlaufend Konfidenzwerte generiert und in dem Speicher des mobilen, tragbaren Kommunikationssystems gespeichert werden.

Im zweiten Abschnitt der verhaltensbasierten Authentifizierung reagiert das mobile, tragbare Kommunikationssystem auf eine Authentifizierungsanfrage an ein für die Authentifizierung konfiguriertes Anwendungsprogramm. Eine Anwendung kann beispielsweise ein Anwendungsprogramm bzw. eine Applikation umfassen, welche auf dem mobilen, tragbaren Kommunikationssystem implementiert ist und/oder über das mobile, tragbare Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Ein solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Kommunikationssystems auf den Speicher zu und liest mindestens einen ersten Konfidenzwert aus. Der mindestens eine erste Konfidenzwert wird dann verwendet, um ein Klassifikationsergebnis zu generieren. Dieses wird gegen ein bestimmtes, vordefiniertes Prüfungskriterium geprüft. Erfüllt das Klassifikationsergebnis das Prüfungskriterium, so wird gemäß einer Ausführungsform ein Signal erzeugt, wobei das Signal die Information des Erfolges der Authentifizierung des Nutzers umfasst. Wird das Prüfungskriterium durch das Klassifikationsergebnis nicht erfüllt, so wird dem Nutzer kein Zugriff auf das System gewährt.

Gemäß einer Ausführungsform werden die Daten durch den mindestens einen Sensor als Datenstrom (Stream) erfasst.

Durch die Erfassung der Daten als Stream ergibt sich vorteilhafterweise eine maximal sensible Einteilung der ersten Konfidenzwerte pro Zeiteinheit. Es werden kontinuierlich Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Konfidenzwerte kann jederzeit ein Klassifikationsergebnis aus den zeitnah generierten Konfidenzwerten generiert werden, ohne dass das mobile, tragbare Kommunikationssystem erst abwarten muss, bis ein vorbestimmtes Messintervall abgelaufen und aktuelle Daten verarbeitet wurden. Ferner werden kontinuierlich neue erste Konfidenzwerte generiert, so dass bei einer Authentifizierungsanfrage aktuelle erste Konfidenzwerte zur Verfügung stehen, sofern sich der Nutzer in der nahen Vergangenheit bewegt hat.

In einer weiteren Ausführungsform umfasst das mobile, tragbare Kommunikationssystem ein Anwendungsverhaltensklassifikationsmodul. Das Anwendungsverhaltensklassifikationsmodul ist konfiguriert um Anwendungsdaten eines Nutzers zu klassifizieren und nutzerspezifische Anwendungsmuster in den Anwendungsdaten zu finden.

Die Anwendungsdaten können beispielsweise die folgenden Datentypen umfassen:
- Positionsdaten des mobilen, tragbaren Kommunikationssystems
- Anwendungsnutzungsdaten des Nutzers
- Biometrische Daten des Nutzers
- Verbindungsdaten des mobilen, tragbaren Kommunikationssystems
- Kalender- und Uhrzeitdaten.

Die Positionsdaten des mobilen, tragbaren Kommunikationssystems werden durch ein Verfahren zur Positionsbestimmung durch einen Positionssensor des mobilen, tragbaren Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers ergibt sich in vorteilhafter Weise, dass ein regelmäßiger Aufenthaltsort des Nutzers (zum Beispiel zu Hause, bei der Arbeit oder an anderen Orten, die er regelmäßig aufsucht) erfasst wird. Ein unberechtigter Nutzer, insbesondere ein Dieb, der das mobile, tragbare Kommunikationssystem benutzt, wird sich in der Regel nicht an den Orten aufhalten, welche der registrierte Nutzer regelmäßig aufsucht. Dadurch ist das mobile, tragbare Kommunikationssystem in der Lage zu erkennen, ob der Nutzer der registrierte Nutzer ist. Damit können die Positionsdaten zur Verbesserung der verhaltensbasierten Authentifikation beitragen.

Die Anwendungsnutzungsdaten umfassen ein Anwendungsnutzungsverhalten des Nutzers, wobei das Anwendungsnutzungsverhalten Informationen umfasst, welche beschreiben, wann welche Anwendungen vom Nutzer auf dem mobilen, tragbaren Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des mobilen, tragbaren Kommunikationssystems, da ein unberechtigter Nutzer, insbesondere ein Dieb, welcher das mobile, tragbare Kommunikationssystem gestohlen hat, auch die Anwendungsnutzungsverhalten des Nutzers imitieren müsste, um Zugriff auf Anwendungen, die einer Authentifizierung bedürfen, bzw. zu dem mobilen, tragbaren Kommunikationssystem zu erlangen.

Die biometrischen Daten können durch einen Sensor zur Erfassung von biometrischen Daten erfasst werden. Dabei können die biometrischen Daten unter anderem die Maße des Gesichts, die Stimmfrequenzen des Nutzers, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin sein mobiles, tragbares Kommunikationssystem benutzt und/oder sich authentifizieren möchte. In dem Moment, in dem der Nutzer sein mobiles, tragbares Kommunikationssystem benutzt und/oder sich authentifizieren möchte, kann je nach ausgeführter Anwendung davon ausgegangen werden, dass der Nutzer auf den Bildschirm des mobilen, tragbaren Kommunikationssystems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem mobilen, tragbaren Kommunikationssystem positioniert sind, ist es möglich, dass eine Hintergrundanwendung des mobilen, tragbaren Kommunikationssystems ein Foto des Nutzers aufnimmt, während er das mobile, tragbare Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die Daten kontinuierlich erfassbar sind, da der Nutzer die Smart-Watch während des regulären Gebrauchs an seinem Handgelenk trägt.

In einer weiteren Ausführungsform umfasst das mobile, tragbare Kommunikationssystem einen Sensor zur Erfassung eines Fingerabdrucks des Nutzers. In vorteilhaften Ausführungsformen ist der Sensor an Stellen des mobilen, tragbaren Kommunikationssystems positioniert, an denen der Nutzer mit seinen Fingerspitzen das mobile, tragbare Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, höchst persönlich vom Benutzer abhängig sind. Insbesondere biometrische Daten bieten eine hohe Fälschungssicherheit, wodurch die Sicherheit der Authentifizierung gesteigert wird.

Die Verbindungsdaten des mobilen, tragbaren Kommunikationssystems mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communikation (NFC) oder ein Kabel mit dem mobilen, tragbaren Kommunikationssystem verbunden werden. So kann für den Nutzer ein Verbindungsprofil angelegt werden, welches Informationen über die regelmäßigen Verbindungen des mobilen, tragbaren Kommunikationssystems mit weiteren Geräten enthält.

Beispielsweise kann ein Nutzer das mobile, tragbare Kommunikationssystem mit dem privaten WLAN einer Wohnung oder einem öffentlichen WLAN verbinden. In einer weiteren Ausführungsform verbindet der Nutzer das mobile, tragbare Kommunikationssystem mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audioanlage(n), Video- bzw. Fernsehanlage(n), und/oder einen PC umfassen, welche der Nutzer zu Hause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und ggf. Zugriff auf die Geräte besitzen muss, mit denen der registrierte Nutzer normalerweise das mobile, tragbare Kommunikationsgerät verbindet.

Durch die Verwendung der Verbindungsdaten zur verhaltensbasierten Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel, welche den Zugriff auf das System freigibt. Ein Dieb, welcher das mobile, tragbare Kommunikationssystem gestohlen hat, müsste also auch die Smartwatch in seinen Besitz bringen, um Zugriff auf das System zu erlangen.

Kalender- und/oder Uhrzeitdaten können durch eine im mobilen, tragbaren Kommunikationssystem implementierte Uhr oder eine externe Uhr, deren Signal durch einen Sensor, insbesondere ein Funksignal durch einen Funksensor, des mobilen, tragbaren Kommunikationssystems empfangen wird, erfasst werden.

In einer weiteren Ausführungsform werden die Verbindungsdaten des mobilen, tragbaren Kommunikationssystems mit anderen Geräten und/oder die Positionsdaten des mobilen, tragbaren Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kommunikation mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein mobiles, tragbares Kommunikationssystem liest. Die Verwendung der Kalender- und/oder Uhrzeitdaten haben somit eine erhöhte Sicherheit des mobilen, tragbaren Kommunikationssystems zur Folge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

In einer weiteren Ausführungsform wird der Abstand zwischen zwei oder mehreren Kommunikationsgeräten eines mobilen, tragbaren Kommunikationssystems aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers verwendet werden.

Das Erfassen des Abstandes zweier Geräte eines mobilen, tragbaren Kommunikationssystems als Teil der Anwendungsdaten und das Verwenden des Abstandes zur verhaltensbasierten Authentifizierung des Nutzers ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das System zu erlangen.

Nach Ausführungsformen wird der Abstand dazu verwendet, um ein grobmotorische Bewegungsmuster des Nutzers zu erkennen.

Um die Anwendungsdaten zur verhaltensbasierten Authentifizierung des Nutzers zu verwenden, werden folgende Schritte ausgeführt:
- Erfassen der Anwendungsdaten,
- Eingabe der Anwendungsdaten in das Anwendungsverhaltensklassifikationsmodul,
- Generieren mindestens eines zweiten Konfidenzwertes durch das Anwendungsverhaltensklassifikationsmodul,
- Speichern des mindestens einen zweiten Konfidenzwertes in dem Speicher des mobilen, tragbaren Kommunikationssystems und
- Trainieren des Anwendungsverhaltensklassifikationsmoduls mit den Anwendungsdaten des Nutzers, um das Anwendungsverhaltensklassifikationsmodul auf ein nutzerspezifisches Anwendungsverhaltensmuster zu trainieren unter der Voraussetzung, dass nach dem Klassifikationsergebnis der Nutzer der im System registrierte Nutzer ist.

Beim Generieren des Klassifikationsergebnisses wird nicht nur der mindestens eine erste Konfidenzwert, welcher auf den Daten des Sensors zur Erfassung grobmotorischer Bewegung beruht, verwendet, sondern auch der mindestens eine zweite Konfidenzwert, welcher sich aus den Anwendungsdaten des Nutzers ergibt.

In einer weiteren Ausführungsform umfasst das mobile, tragbare Kommunikationssystem ein Feinmotorikklassifikationsmodul, welches dazu ausgebildet ist eine feinmotorische Bewegung des Nutzers zu erfassen und einen Sensor zur Erfassung einer feinmotorischen Bewegung in Form von feinmotorischen Daten.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des mobilen, tragbaren Kommunikationssystems erfasst wird, kann etwa eine bestimmte Bewegung der Finger umfassen.

In Ausführungsformen werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das mobile, tragbare Kommunikationssystem tätigt. Eine solche Eingabe kann beispielsweise, ohne darauf beschränkt zu sein, das Tippen von Wörtern bzw. Wischen von Wörtern, d.h. einem zu Tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung mit der der Nutzer eine Eingabe tätigt sein. Ferner können feinmotorischen Bewegungen Änderungen der Ausrichtung, wie etwa des Neigungswinkels, des mobilen, tragbaren Kommunikationssystems während der Nutzung umfassen.

Ein Sensor zur Erfassung einer feinmotorischen Bewegung kann als beispielsweise als optisches System oder als Touchpad bzw. Touchscreen, insbesondere, jedoch ohne darauf beschränkt zu sein, ein resistiver Touchscreen, ein oberflächenkapazitiver Touchscreen, ein projiziert-kapazitiver Touchscreen oder ein induktiver Touchscreen ausgebildet sein.

Um die feinmotorischen Daten zur feinmotorischen Authentifizierung des Nutzers zu verwenden, werden die folgenden Schritte ausgeführt:
- Erfassen der feinmotorischen Daten,
- Eingabe der feinmotorischen Daten in das Feinmotorikklassifikationsmodul,
- Generieren mindestens eines dritten Konfidenzwertes durch das Feinmotorikklassifikationsmodul,
- Speichern des mindestens einen dritten Konfidenzwertes in dem Speicher des mobilen, tragbaren Kommunikationssystems und
- Trainieren des Feinmotorikklassifikationsmoduls mit den feinmotorischen Daten des aktuellen Nutzers, um das Feinmotorikklassifikationsmodul auf ein nutzerspezifisches feinmotorisches Bewegungsmuster zu trainieren unter der Voraussetzung, dass nach dem Klassifikationsergebnis der aktuelle Nutzer der im System registrierte Nutzer.

Beim Prüfen des Klassifikationsergebnisses gegen das Prüfungskriterium wird nicht nur der mindestens eine erste Konfidenzwert, welcher auf den Daten des Sensors zur Erfassung der grobmotorischen Bewegung beruht, verwendet, sondern auch der mindestens eine dritte Konfidenzwert, welcher sich aus den feinmotorischen Daten des Nutzers ergibt.

Durch das Verwenden einer feinmotorischen Bewegung eines Nutzers erhöht sich die Sicherheit der verhaltensbasierten Authentifizierung, da weitere Parameter nötig sind, um den Nutzer zu authentifizieren.

In einer weiteren Ausführungsform wird nach einem fehlgeschlagenen Authentifizierungsversuch der Nutzer dazu aufgefordert eine Eingabe in das mobile, tragbare Kommunikationssystem zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung, ergibt sich vorteilhafterweise für den Nutzer die Möglichkeit sich trotz einer fehlgeschlagenen Authentifizierung zu authentifizieren ohne dabei auf eine PIN oder ein Passwort zurückgreifen zu müssen.

Aufgrund der Ähnlichkeit der Verarbeitungsstruktur der verschiedenen Daten gelten die folgenden Ausführungen für die grobmotorischen Daten, die feinmotorischen Daten und die Anwendungsdaten, das Grobmotorik-, Anwendungsverhaltens- und Feinmotorikklassifikationsmodul sowie den mindestens einen ersten, zweiten und dritten Konfidenzwert gleichermaßen. Ferner bezeichnet "Daten" im Folgenden die Daten des Sensors zur Erfassung einer grobmotorischen Bewegung, die Anwendungsdaten und/oder die Daten des Sensors zur Erfassung einer feinmotorischen Bewegung. Sind nur die Daten des Sensors zur Erfassung einer grobmotorischen Bewegung, die Anwendungsdaten oder die Daten einer feinmotorischen Bewegung gemeint, so ist dies explizit angegeben.

Ferner sind gemäß einer weiteren Ausführungsform das Grobmotorikklassifikationsmodul und/oder das Anwendungsverhaltensklassifikationsmodul und/oder das Feinmotorikklassifikationsmodul als ein Klassifikationsmodul ausgebildet, welches in der Lage ist die Daten zu verarbeiten. Beispielsweise sind gemäß einer weiteren Ausführungsform das Grobmotorikklassifikationsmodul und/oder das Anwendungsverhaltensklassifikationsmodul und/oder das Feinmotorikklassifikationsmodul von ein und demselben oder verschiedenen Anwendungsprogrammen umfasst, welche zu einer Ausführung einer verhaltensbasierten Authentifizierung konfiguriert sind.

Das bzw. die Klassifikationsmodule, d.h. das Grobmotorikklassifikationsmodul und/oder das Anwendungsverhaltensklassifikationsmodul und/oder das Feinmotorikklassifikationsmodul, generieren nach Ausführungsformen ein gemeinsames Klassifikationsergebnis unter Verwendung von Konfidenzwerten, welche von dem oder den Klassifikationsmodulen jeweils für klassifikationsmodulspezifische Daten ermittelt wurden.

In einer weiteren Ausführungsform wird bei nichterfolgreicher Prüfung des Klassifikationsergebnisses gegen das Prüfungskriterium ein Signal gesendet, welches die Information der fehlgeschlagenen Authentifizierung umfasst. Ein solches Signal kann gemäß einer Ausführungsform auf die Information der fehlgeschlagenen Authentifizierung beschränkt sein. Gemäß weiterer Ausführungsformen kann das Signal die Information des Grundes des Fehlschlagens der Authentifizierung enthalten. Ein solcher Grund kann nach weiteren Ausführungsformen beispielsweise das Alter des aktuellen Klassifikationsergebnisses, das Klassifikationsergebnis selbst oder einen anders gearteten Grund des Fehlschlagens umfassen. In einer Ausführungsform kann ein Prüfungskriterium umfassen, dass das Klassifikationsergebnis nicht älter als einige Minuten, einige Stunden, ein Tag oder eine Woche ist. In einer weiteren Ausführungsform kann das Prüfungskriterium umfassen, dass das Klassifikationsergebnis einen bestimmten Schwellenwert erreichen muss.

Durch das Senden eines Signals bei fehlgeschlagener Authentifizierung ergibt sich vorteilhafterweise, dass der Nutzer darüber informiert wird, dass seine Authentifizierung fehlgeschlagen ist und sich gezielt so verhalten kann, dass er Zugriff auf das System erlangen kann. Beispielsweise zeigt das Signal an, dass die Gangart des Nutzers nicht erkannt wurde. Der Nutzer bemerkt das Signal und beginnt auf und ab zu gehen, bis das Prüfungskriterium erfüllt ist. Ein solches Signal kann dem Nutzer beispielsweise mittels einer Anzeige des mobilen, tragbaren Kommunikationssystems angezeigt werden, akustisch über einen Lautsprecher des mobilen, tragbaren Kommunikationssystems mitgeteilt werden oder mittels eines Vibrationsmusters, erzeugt durch einen Vibrationsmechanismus des mobilen, tragbaren Kommunikationssystems, signalisiert werden.

In einer weiteren Ausführungsform ist in dem Speicher des mobilen, tragbaren Kommunikationssystems mindestens ein Muster in Form einer Musterfunktion und mindestens ein Vergleichsdatensatz gespeichert, wobei der Vergleichsdatensatz Werte für mindestens einen Vergleichsparameter beinhaltet, wobei durch das jeweilige Klassifikationsmodul die folgenden Schritte ausgeführt werden:
a) Vergleich der erfassten Daten mit der mindestens einen Musterfunktion.
b) Zuordnen der Daten zu je einem der Musterfunktion entsprechenden Muster und Erhalten von mindestens einem der dem Muster entsprechenden Klassifikationsparameter durch das Klassifikationsmodul, falls die Daten dem mindestens einen Muster zugeordnet werden können.
c) Generieren eines Konfidenzwertes für jeden Klassifikationsparameter durch einen Vergleich des mindestens einen Klassifikationsparameters mit dem jeweiligen Vergleichsparameter des Vergleichsdatensatzes.

In einer weiteren Ausführungsform werden die Vergleichsparameter neu berechnet und in dem Speicher des mobilen, tragbaren Kommunikationssystems gespeichert, wenn sich der Vergleichsdatensatz ändert.

Durch das Generieren des Klassifikationsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Einem Angreifer, welcher versucht mittels eines elektronischen Angriffs auf das System zuzugreifen, in dem der Angreifer versucht die Daten und Anwendungsdaten des mindestens einen Sensors, den mindestens einen Klassifikationsparameter oder den mindestens einen Konfidenzwert zu erraten, um dem System ein gefälschtes Klassifikationsergebnis vorzutäuschen, müsste die mindestens eine Musterfunktion kennen oder wissen, welche Klassifikationsparameter zu Konfidenzwerten verarbeitet werden und welche Werte diese aufweisen müssen, damit ein Zugriff auf das System gewährt wird.

In einer Ausführungsform werden die Daten im Speicher des mobilen, tragbaren Kommunikationssystems gespeichert, wenn das aus den Daten resultierende Klassifikationsergebnis erfolgreich zur Authentifizierung des Nutzers beigetragen hat. Das Speichern der Daten erfolgt, indem die Daten den entsprechenden Vergleichsdatensätzen hinzugefügt werden. Die Vergleichsparameter werden erneut aus dem nun modifizierten Vergleichsdatensatz errechnet, um eine nächste Authentifizierung des Nutzers mit aktuellen Vergleichsparametern durchführen zu können.

Durch das Speichern der Daten im Speicher des mobilen, tragbaren Kommunikationssystems und das Hinzufügen der Daten zu dem entsprechenden Vergleichsdatensatz im Falle einer erfolgreichen Authentifizierung des Nutzers ergibt sich vorteilhafterweise ein rückgekoppeltes Trainieren der Klassifikationsmodule. Die Vergleichsdatensätze und somit die Vergleichsparameter passen sich dem Verhalten des Nutzers an, wodurch das Verfahren gegenüber geringfügigen Verhaltensänderungen resistent wird bzw. sich diesen anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Bei solchen und ähnlichen Verhaltensänderungen kann sich der Nutzer aufgrund des Speicherns der Daten in dem Speicher des mobilen, tragbaren Kommunikationssystems und des Hinzufügens der Mess-Daten zu dem entsprechenden Vergleichsdatensatz auch weiterhin erfolgreich authentifizieren.

In einer weiteren Ausführungsform werden die Daten, welche Teil des jeweiligen Vergleichsdatensatzes sind aus dem Speicher des mobilen, tragbaren Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der Daten der Vergleichsdatensatz vollständig gelöscht, so wird gemäß einer weiteren Ausführungsform ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, d.h. ein neuer Vergleichsdatensatz generiert wurde. Vergleichsdaten für einen solchen neuen Vergleichsdatensatz können beispielsweise erfasst werden, indem sich der Nutzer nicht-verhaltensbasiert authentifiziert, beispielsweise über eine PIN oder ein analoges Verfahren, und im Voraus oder im Nachhinein so verhält, dass neue Daten erfasst und in dem Speicher des mobilen, tragbaren Kommunikationssystems gespeichert werden, womit die erfassten Daten einen neuen Vergleichsdatensatz bilden.

Durch das Löschen der Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete Daten, welche nicht mehr das aktuelle Verhalten des Nutzers korrekt wiederzugeben vermögen, vorsorglich gelöscht werden. Das Löschen von Daten eines bestimmten Alters bewirkt somit, dass das Verhalten des Nutzers in der Vergangenheit, welches nicht notwendiger Weise mit dem Verhalten des Nutzers der Gegenwart übereinstimmen muss, keinen Einfluss auf die verhaltensbasierte Authentifizierung des Nutzers nimmt. Das Alter von Daten bemisst sich beispielsweise ab dem Zeitpunkt der Erfassung und/oder Speicherung der Daten.

In einer weiteren Ausführungsform muss sich der Nutzer nach einer Erstinbetriebnahme authentifizieren.

Eine Authentifikation nach einer Erstinbetriebnahme kann beispielsweise eine Eingabe eines Einmal-Passworts bzw. einer Initialisierungs-PIN umfassen, welche einem berechtigten Nutzer beispielswiese im Zuge eines rechtmäßigen Erwerbs des Systems zur Verfügung gestellt wird. Nach weiteren Ausführungsformen kann die Authentifikation nach einer Erstinbetriebnahme beispielsweise auch eine Eingabe bzw. ein Senden eines initialen Authentifizierungstokens in bzw. an das System umfassen. Das initiale Authentifizierungstoken kann beispielswiese von einem zentralen Authentifizierungsservice bereitgestellt werden, demgegenüber sich der Nutzer als berechtigter Nutzer authentifiziert hat.

Durch das Authentifizieren nach der Erstinbetriebnahme ergibt sich somit in vorteilhafter Weise, dass nur der berechtigte Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des mobilen, tragbaren Kommunikationssystems auf den berechtigten Nutzer. Im Zuge der Authentifizierung und/oder danach werden Daten für eine verhaltensbasierte Authentifizierung des berechtigten Nutzers erfasst und zu dem Vergleichsdatensatz hinzugefügt. Somit wird das Klassifikationsmodul auf den entsprechenden Nutzer trainiert, d.h. das mobile, tragbare Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

In einer weiteren Ausführungsform muss der Nutzer das mobile, tragbare Kommunikationssystem nach der Erstinbetriebnahme personalisieren. Wird das mobile, tragbare Kommunikationssystem zum ersten Mal zur verhaltensbasierten Authentifizierung verwendet, sendet das mobile, tragbare Kommunikationssystem ein Signal an den Nutzer. Das Signal umfasst die Aufforderung zur Personalisierung des mobilen, tragbaren Kommunikationsgeräts durch den Nutzer durch ein gezieltes bzw. vorgegebenes Verhalten, welches mindestens einen Vergleichsdatensatz generiert. Beispielsweise wird der Nutzer aufgefordert mit dem mobilen, tragbaren Kommunikationsgerät zu laufen oder zu gehen.

Durch das Personalisieren des mobilen, tragbaren Kommunikationssystems nach der Erstinbetriebnahme aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

In einer weiteren Ausführungsform werden die Konfidenzwerte der Klassifikationsparameter in dem Speicher des mobilen, tragbaren Kommunikationssystems gespeichert. Dabei bildet die Summe der Konfidenzwerte der Klassifikationsparameter das Klassifikationsergebnis.

Durch das Speichern der Konfidenzwerte als Klassifikationsergebnis ergibt sich in vorteilhafterweise, dass die Konfidenzwerte einzeln zur Prüfung herangezogen werden können. In einer weiteren Ausführungsform werden für Authentifizierungsanfragen mit einem niedrigen Prüfungskriterium weniger Konfidenzwerte aus dem Speicher ausgelesen und geprüft, als bei einer Authentifizierungsanfrage mit einem höheren Prüfungskriterium. Ein niedriges Prüfungskriterium kann beispielsweise dann vorliegen, wenn der Nutzer den Radiosender wechseln möchte. Ein hohes Prüfungskriterium kann beispielsweise vorliegen, wenn der Nutzer eine Haustür öffnen möchte. In einer weiteren Ausführungsform umfasst das Prüfungskriterium für jeden Konfidenzwert einen anderen Schwellenwert, so dass die Qualität der einzelnen Klassifikationsparameter, aus denen die Konfidenzwerte berechnet werden, bei der Prüfung des Klassifikationsergebnisses gegen das Prüfungskriterium berücksichtigt wird.

In einer weiteren Ausführungsform umfasst das Prüfungskriterium, dass der mindestens eine Konfidenzwert einen bestimmten Schwellenwert erreichen muss, um eine erfolgreiche Authentifizierung des Nutzers zu erreichen.

Dadurch, dass das Prüfungskriterium darin besteht, dass ein Konfidenzwert eine Mindesthöhe erreichen muss, ergibt sich in vorteilhafter Weise, dass die Prüfung des Klassifikationsergebnisses gegen das Prüfungsergebnis durch den Vergleich von nur einem Wert durchgeführt werden kann. Für diesen Schritt sind somit sehr wenige Operationen notwendig, wodurch das System weniger Rechenoperationen ausführen muss. Somit ergibt sich für das System ein verringerter Energieverbrauch. Insbesondere für mobile, tragbare Kommunikationssysteme, welche durch eine Batterie betrieben werden, ist eine solche Ausführungsform vorteilhaft.

In einer weiteren Ausführungsform umfasst das Prüfungskriterium, dass mehrere gespeicherte Konfidenzwerte jeweils einen individuellen Schwellenwert erreichen müssen.

Dadurch, dass das Prüfungskriterium jeweils einen individuellen Schwellenwert für mehrere Konfidenzwerte umfasst, kann das Prüfungskriterium individuell an die jeweiligen Genauigkeiten der einzelnen Konfidenzwerte angepasst werden. Dadurch ergibt sich eine erhöhte Genauigkeit der gesamten verhaltensbasierten Authentifizierung.

Nach einer weiteren Ausführungsform wird der mindestens eine zweite Konfidenzwert, welcher auf den Anwendungsdaten beruht, nur dann bei der Generierung des Klassifikationsergebnisses verwendet, wenn in einem vorangegangenen Schritt das Grobmotorikklassifikationsmodul in den Daten eine grobmotorische Bewegung des Nutzers erkannt hat. So werden beispielsweise Anwendungsnutzungsdaten eines Radios nur dann erfasst, wenn der Nutzer gerade am Gehen ist. In einer weiteren Ausführungsform kann ein Herausziehen des mobilen, tragbaren Kommunikationssystems aus der Tasche erkannt werden, woraufhin beispielsweise ein Ausführen einer Nachrichtenanwendung als ein Teil des Anwendungsnutzungsprofils herangezogen wird.

Durch das Verwenden des mindestens einen zweiten Konfidenzwertes, welcher auf den Anwendungsdaten beruht, in Kombination mit der erkannten grobmotorischen Bewegung des Nutzers ergibt sich in vorteilhafter Weise, dass die Klassifikation des ersten Klassifikationsmoduls, welches die grobmotorischen Bewegungsdaten heranzieht, wesentlich genauer werden kann, da der mindestens eine Konfidenzwert auf Basis der Anwendungsdaten zur Verfeinerung des Klassifikationsergebnisses aufgrund des mindestens einen Konfidenzwerts der grobmotorischen Bewegungsdaten dienen kann.

In einer weiteren Ausführungsform werden die Konfidenzwerte, welche letztendlich aus den grob- und/oder feinmotorischen Daten und/oder den Anwendungsdaten resultieren, zu einem resultierenden Konfidenzwert zusammengefasst. Das Zusammenfassen kann beispielsweise, aber nicht zwangsweise, die Bildung eines Mittelwertes, eines Medians oder eines Modalwerts umfassen. Die Bildung des resultierenden Konfidenzwerts ermöglicht die Angabe der Wahrscheinlichkeit, mit der der aktuelle Nutzer der im mobilen, tragbaren Kommunikationssystem registrierte Nutzer ist.

Durch die Bildung eines resultierenden Konfidenzwertes und die Verwendung des resultierenden Konfidenzwertes zur verhaltensbasierten Authentifizierung des Nutzers kann sich in vorteilhafter Weise ergeben, dass nur ein einziger Zahlenwert nötig ist, um den Nutzer zu authentifizieren. Es werden keine Details bezüglich der Anwendungsnutzung oder der Person des Nutzers an das System, welches der Authentifizierung bedarf, gesendet, um den Nutzer zu authentifizieren. Dies schützt insbesondere die Datensicherheit bzw. die Anonymität des Nutzers, da aus dem resultierenden Konfidenzwert nicht mehr nachvollziehbar ist, aus welchen Konfidenzwerten oder Klassifikationsparametern sich dieser im Detail zusammensetzt und welche Werte diese jeweils aufwiesen.

In einer weiteren Ausführungsform sind die einzelnen Konfidenzwerte der Klassifikationsparameter bei der Auswertung mit jeweils einem Gewichtungsfaktor gewichtet. Die Gewichtungsfaktoren sind dabei dem jeweiligen Konfidenzwert zugeordnet.

Durch das Verwenden von Gewichtungsfaktoren für die jeweiligen Konfidenzwerte bei der Errechnung des resultierenden Konfidenzwerts kann sich in vorteilhafter Weise eine Erhöhung der Genauigkeit des resultierenden Konfidenzwerts bei einer Prüfung gegen ein Prüfungskriterium ergeben. Die einzelnen Konfidenzwerte, die aus unterschiedlichen Klassifikationsparametern resultieren, können je nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer eines ersten mobilen, tragbaren Kommunikationssystems könnte beispielsweise regelmäßig eine Radioanwendung seines mobilen, tragbaren Kommunikationssystems nutzen, während ein zweiter Nutzer eines zweiten mobilen, tragbaren Kommunikationssystems niemals eine Radioanwendung nutzt. Durch die Möglichkeit des Gewichtens der einzelnen Konfidenzwerte kann dem Konfidenzwert für die Nutzung einer Radioanwendung für den ersten Nutzer ein höherer Gewichtungsfaktor zugewiesen werden, als dem zweiten Nutzer.

In einer weiteren Ausführungsform sind die Gewichtungsfaktoren der Konfidenzwerte durch das Prüfungskriterium vorgegeben.

Durch das Vorgeben der Gewichtungsfaktoren durch das Prüfungskriterium ergibt sich in vorteilhafter Weise, dass unterschiedliche Konfidenzwerte individuell in Abhängigkeit davon gewichtet werden können, wie hoch der Sicherheitsgrad des Prüfungskriteriums ist. So können beispielsweise bei Prüfungskriterien, die einer sehr hohen Authentifizierungswahrscheinlichkeit bedürfen, alle Parameter miteinbezogen werden, wodurch alle Konfidenzwerte zu einem resultierenden Konfidenzwert ausgelesen werden. Dem gegenüber werden bei einem Prüfungskriterium, welches einer niedrigen Sicherheitsstufe bedarf, nur einige oder ein einzelner Konfidenzwert, bzw. Klassifikationsparameter zur Auswertung herangezogen.

In einer weiteren Ausführungsform sind die einzelnen Gewichtungsfaktoren der jeweiligen Konfidenzwerte fest vorgegeben. Fest vorgegeben meint in diesem Zusammenhang, dass die Gewichtungsfaktoren von vornherein bei einer Erstinbetriebnahme des Systems festgelegt werden und keine Änderungen der Gewichtungsfaktoren während des bestimmungsmäßigen Betriebes des mobilen, tragbaren Kommunikationssystems vorgesehen sind.

Durch das Vorgeben der Gewichtungsfaktoren für die Konfidenzwerte ergibt sich in vorteilhafter Weise ein reduzierter Rechenaufwand, welcher insbesondere für mobile, tragbare Kommunikationssysteme einen niedrigen Batterieverbrauch zur Folge hat. Das mobile, tragbare Kommunikationssystem muss nicht überprüfen, welche Gewichtungsfaktoren für welchen Konfidenzwert festzulegen sind, sondern letztendlich nur in seinem Speicher die entsprechenden Konfidenzwerte auslesen, die bereits mit den Gewichtungsfaktoren verrechnet sind.

In einer weiteren Ausführungsform legt der Nutzer in einem Initiierungsprozess die Gewichtungsfaktoren der einzelnen Konfidenzwerte selbst fest. Die festgelegten Gewichtungsfaktoren werden dann in einer Konfigurationsdatei in dem Speicher des mobilen, tragbaren Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, inwieweit seine Anwendungen bzw. Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder nur sehr schwach in die Generierung des Klassifikationsergebnisses miteingehen soll, da er die Radioanwendung üblicherweise nur unregelmäßig nutzt. Der gleiche Nutzer könnte hingegen die Konfidenzwerte der Positionsbestimmung stärker in die Generierung des Klassifikationsergebnisses miteinfließen lassen, da er einen sehr strukturierten Tagesablauf hat und sich mit hoher Regelmäßigkeit an bestimmten Orten aufhält.

In einer weiteren Ausführungsform wird das Prüfungskriterium durch die ausgeführte Anwendung, welche die Authentifizierung des Nutzers anfragt, festgelegt.

Ein Festlegen des Prüfungskriteriums durch die ausgeführte Anwendung ergibt in vorteilhafter Weise, dass die Sicherheit der Authentifizierung mittels des Prüfungskriteriums durch das System bestimmt werden kann. So können beispielsweise Systeme, die sensible Bereiche oder Informationen offenbaren, beispielsweise eine Wohnungstür, die die private Wohnung des Nutzers schützt, ein wesentlich höheres Sicherheitsniveau des Nutzers erfordern, als eine Musikanlage.

In einer weiteren Ausführungsform sind auf dem mobilen, tragbaren Kommunikationssystem mehrere Nutzer registriert und das Klassifikationsergebnis wird für jeden registrierten Nutzer generiert. Ein Nutzererkennungsmodul entscheidet dann, welcher Nutzer gerade aktiv ist, wobei das Nutzererkennungsmodul ebenfalls vom Prozessor des mobilen, tragbaren Kommunikationssystems ausgeführt wird.

In einer weiteren Ausführungsform wird die Identifikation des Nutzers durch das Nutzererkennungsmodul mittels eines Entscheidungsbaums getroffen.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige mobile, tragbare Kommunikationssystem abwechselnd benutzen, das Verfahren zur verhaltensbasierten Authentifizierung anwenden können.

In einer weiteren Ausführungsform ist das Nutzererkennungsmodul so konfiguriert, dass es einen Wechsel des Nutzers anhand von grob- und/oder feinmotorischen Daten erkennt. Das Nutzererkennungsmodul generiert ein zweites Klassifikationsergebnis, welches angibt, welcher der registrierten Nutzer gerade der aktuelle Nutzer ist. Das zweite Klassifikationsergebnis wird dann gebildet, wenn das Nutzererkennungsmodul eine Bewegung erkennt, die typisch für einen Nutzerwechsel eines mobilen, tragbaren Kommunikationssystems ist. Eine typische Bewegung kann dabei das Ab- und wieder Anlegen einer Smartwatch, das Übergeben eines Mobiltelefons oder eine vergleichbare Bewegung umfassen.

Das Nutzererkennungsmodul ist konfiguriert einen Nutzerwechsel anhand einer grob- und/oder feinmotorischen Bewegung zu erkennen. Dazu ist das Nutzererkennungsmodul beispielsweise auf ein Erkennen einer grob- und/oder feinmotorischen Bewegung des Ab- und/oder Anlegens des mobilen, tragbaren Kommunikationssystems konfiguriert. Ferner ist das Nutzererkennungsmodul auf ein Erkennen von nutzerspezifischen Bewegungsmustern in den Daten und/oder den feinmotorischen Daten trainiert, wobei das Nutzererkennungsmodul wiederholt die folgenden Schritte ausführt:
- Eingabe der der Daten und/oder feinmotorischen Daten in das Nutzererkennungsmodul,
- Generieren eines zweiten Klassifikationsergebnisses durch das Nutzererkennungsmodul, ob ein Nutzerwechsel stattfindet oder das mobile, tragbare Kommunikationssystem ab- oder angelegt wurde,
- Speichern des zweiten Klassifikationsergebnisses in dem Speicher des mobilen, tragbaren Kommunikationssystems.

Anschließend greift das Nutzererkennungsmodul auf den Speicher des mobilen, tragbaren Kommunikationssystems zu, um mindestens eines der gespeicherten zweiten Klassifikationsergebnisse aus dem Speicher auszulesen. Das mindestens eine vierte Klassifikationsergebnis wird ausgewertet, um zu überprüfen, ob ein Nutzerwechsel stattgefunden hat. Die bisherigen ersten, zweiten und/oder dritten Klassifikationsergebnisse werden im Falle eines Nutzerwechsels verworfen, um sicherzustellen, dass bei einem Nutzerwechsel ein nicht authentifizierter Nutzer das mobile, tragbare Kommunikationssystem verwendet. Dieser nicht authentifizierte Nutzer muss sich dann neu authentifizieren.

In einer Ausführungsform ist das durch das Grobmotorikklassifikationsmodul implementierte Maschinenlernverfahren ein Random-Forrest Algorithmus, welcher eine Bewegung als eine dem Grobmotorikklassifikationsmodul bekannte Bewegung klassifiziert.

In einer weiteren Ausführungsform ist das Nutzererkennungsmodul so konfiguriert, dass es eine zumindest vorübergehende Beendigung der Nutzung des mobilen, tragbaren Kommunikationssystems durch den aktuellen Nutzer anhand von grobund/oder feinmotorischen Daten erkennt. Dazu ist das Nutzererkennungsmodul beispielsweise auf ein Erkennen einer grob- und/oder feinmotorischen Bewegung des Ablegens des mobilen, tragbaren Kommunikationssystems konfiguriert. Wird eine solche Beendigung erkannt, werden beispielsweise die bisherigen Konfidenzwerte verworfen, um sicherzustellen, dass bei einem möglichen Nutzerwechsel ein nicht authentifizierter Nutzer das mobile, tragbare Kommunikationssystem verwendet. Dieser nicht authentifizierte Nutzer muss sich dann neu authentifizieren.

Durch das Implementieren des Maschinenlernverfahrens als Random-Forrest Algorithmus ergibt sich in vorteilhafter Weise, dass die Parameter zur Klassifikation der grobmotorischen Bewegung in besonders effizienter Weise zu der Klassifikation beitragen und ferner, dass sich der Random-Forrest Algorithmus aufgrund der festgelegten Anzahl der zur Verfügung stehenden Parameter besonders leicht implementieren lässt.

In einer weiteren Ausführungsform kommunizieren der Server und das mobile, tragbare Kommunikationssystem über eine kryptographisch gesicherte und/oder verschlüsselte Drahtlosverbindung. Die Drahtlosverbindung kann beispielsweise als eine Verbindung über Bluetooth, kabelloses, lokales Netzwerk (WLAN), Radio Frequency Identification (RFID) oder Near Field Communication (NFC) ausgebildet sein. Die kryptographische Sicherung kann das Austauschen von Zertifikaten, ein Challenge-Response-Verfahren oder andere geeignete Verfahren zur kryptographischen Sicherung umfassen. Die Verschlüsselung kann eine symmetrische oder eine asymmetrische Verschlüsselung umfassen.

Durch die Verbindung des mobilen, tragbaren Kommunikationssystems über eine kryptographisch gesicherte und/oder verschlüsselte Drahtlosverbindung ergibt sich in vorteilhafter Weise, dass der Nutzer sein mobiles, tragbares Kommunikationssystem auf eine einfache Weise mit dem Server verbinden kann. Es ist keine feste Kabelverbindung erforderlich und der Nutzer kann von einem beliebigen Punkt aus eine Verbindung zu dem Server herstellen, solange er sich innerhalb einer Reichweite der Drahtlosverbindung oder einem Netzwerk, bzw. einem virtuellen Netzwerk, mit dem Server befindet.

In einer weiteren Ausführungsform sind der Server und die Vorrichtung über ein Netzwerk miteinander verbunden.

Durch das Verwenden eines Netzwerks zur Verbindung des Servers mit einer Vorrichtung ergibt sich in vorteilhafter Weise, dass falls der Server defekt ist und repariert werden muss, der Server aus dem Netzwerk gelöst werden und unabhängig von der Vorrichtung repariert werden kann. Dies ist besonders für große Vorrichtungen, wie Waschmaschinen, Fahr- oder Flugzeuge oder eine Haustür vorteilhaft, da eine Wartung von Vorrichtungen dieser Größe umständlich und/oder kostenintensiv sein kann.

Ferner kann durch das Verwenden eines Netzwerks der Server leicht gegen einen neueren Server mit möglicherweise neueren Sicherheitsstandards ausgetauscht werden, ohne dass direkt eine neue Vorrichtung verwendet werden muss. Da insbesondere in der Informationstechnologie in Zeiträumen von einigen Monaten bis wenigen Jahren Standards grundlegend ändern und/oder verbessern können, ist die Austauschbarkeit des Servers insbesondere für Vorrichtungen, welche üblicherweise über mehrere Jahre oder gar Jahrzehnte verwendet werden, wie beispielsweise ein Fahrzeug oder große Maschinen, Haustüren etc., besonders vorteilhaft, da der Nutzer lediglich den Server erneuern muss, um dem aktuellen Sicherheitsstandard gerecht zu werden.

Im Weiteren werden Ausführungsformen mit Bezugnahme auf die Zeichnungen näher erläutert. Es zeigen:
- Figur 1: einen schematischen Aufbau eines beispielhaften mobilen, tragbaren Kommunikationssystems zur verhaltensbasierten Authentifizierung eines Nutzers.
- Figur 2: einen schematischen Ablauf einer verhaltensbasierten Authentifizierung in einem Ablaufdiagramm.
- Figur 3a: Schritte der verhaltensbasierten Authentifizierung in einem Ablaufdiagramm.
- Figur 3b: Schritte eines Trainings eines Klassifikationsmoduls in einem Ablaufdiagramm.
- Figur 4: ein schematisches Verfahren zur Abarbeitung von Daten, die das mobile, tragbare Kommunikationssystem verarbeitet.
- Figur 5: einen schematischen Aufbau einer beispielhaften Verbindung zwischen einem mobilen, tragbaren Kommunikationssystem, einem Server und einer Vorrichtung.
- Figur 6: Schritte der Authentifizierung eines Nutzers in einem Ablaufdiagramm.

Elemente der nachfolgenden Ausführungsformen, die einander entsprechen, werden mit denselben Bezugszeichen gekennzeichnet.

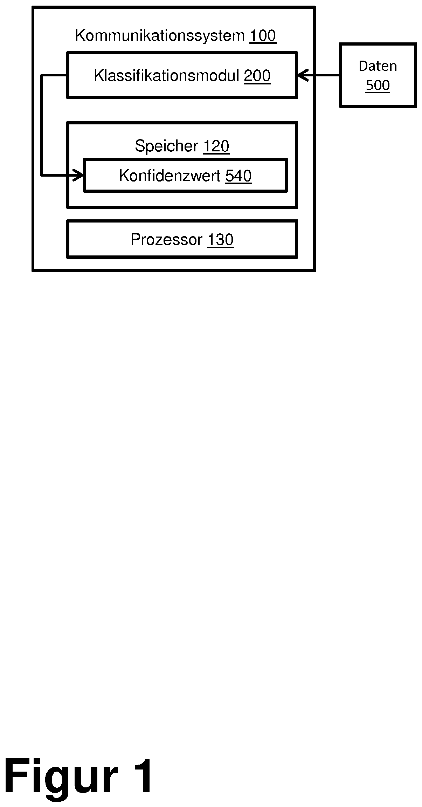

Figur 1 zeigt den schematischen Aufbau einer Ausführungsform eines mobilen, tragbaren Kommunikationssystems 100, welches von einem Nutzer mitgeführt wird. Das mobile, tragbare Kommunikationssystem 100 kann in verschiedenen Ausführungsformen ein einzelnes mobiles, tragbares Kommunikationsgerät oder mehrere mobile, tragbare Kommunikationsgeräte umfassen. Das mobile, tragbare Kommunikationssystem ist geeignet, um eine verhaltensbasierte Authentifizierung des Nutzers 1 auszuführen. Das mobile, tragbare Kommunikationssystem 100 weist einen Sensor auf, welcher dazu geeignet ist, eine grobmotorische Bewegung des Nutzers als Daten 500 zu erfassen. Ferner weist das mobile, tragbare Kommunikationssystem 100 ein Klassifikationsmodul 200 auf, welches als Grobmotorikklassifikationsmodul ausgebildet ist, welches geeignet ist, die Daten 500 eines Sensors zu verarbeiten. Das mobile, tragbare Kommunikationssystem 100 weist ferner einen Speicher 120 auf, in dem die Daten 500 in verarbeiteter Form als Konfidenzwert 540 gespeichert werden können. Das mobile, tragbare Kommunikationssystem 100 weist ferner einen Prozessor 130 auf, welcher das Klassifikationsmodul 200 ausführt.

In einer weiteren Ausführungsform implementiert das mobile, tragbare Kommunikationssystem 100 eine Anwendung, welche ausgebildet ist, Anwendungsdaten als Daten 500 zu erfassen. Das mobile, tragbare Kommunikationssystem 100 umfasst ein weiteres Klassifikationsmodul 200 welches als Anwendungsverhaltensklassifikationsmodul ausgebildet ist. Das Anwendungsverhaltensklassifikationsmodul ist ausgebildet die Anwendungsdaten einer Anwendung zu verarbeiten.

In einer weiteren Ausführungsform weist das mobile, tragbare Kommunikationssystem 100 einen Sensor, welcher ausgebildet ist, eine feinmotorische Bewegung des Nutzers als Daten 500 zu erfassen. Das mobile, tragbare Kommunikationssystem 100 umfasst ein weiteres Klassifikationsmodul 200, welches als Feinmotorikklassifikationsmodul ausgebildet ist. Das Feinmotorikklassifikationsmodul ist ausgebildet die feinmotorischen Bewegungsdaten des Nutzers zu verarbeiten.

Führt der Nutzer eine grobmotorische Bewegung aus und trägt dabei das mobile Kommunikationssystem 100 bei sich, so kann der Sensor diese Bewegung in Form von Daten 500 erfassen. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein, falls der Teil des mobilen, tragbaren Kommunikationssystems 100, welches den Sensor aufweist ist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems 100 aus einer Tasche verstanden werden.

Nutzt der Nutzer eine Anwendung, welche auf seinem mobilen, tragbaren Kommunikationssystem 100 implementiert ist, so erfasst das mobile, tragbare Kommunikationssystem 100 die Anwendungsdaten als Daten 500.

Führt der Nutzer eine feinmotorische Bewegung aus, so kann der Sensor diese Bewegung in Form von Daten 500 erfassen. Der Sensor kann beispielsweise als ein Touchdisplay, eine Tastatur oder eine Kombination aus beidem ausgebildet sein. Die feinmotorische Bewegung des Nutzers kann beispielsweise als Tippgeschwindigkeit, Eingabefrequenz oder Eingabegenauigkeit erfasst werden.

Das Klassifikationsmodul 200 empfängt die Daten 500 und klassifiziert die Daten 500 als ein Muster. Das Klassifikationsmodul 200 wird dabei von einem Prozessor 130 des mobilen, tragbaren Kommunikationssystems 100 ausgeführt. Aus der Klassifikation generiert das Grobmotorikklassifikationsmodul 200 den mindestens einen Konfidenzwert 540. Dieser mindestens eine Konfidenzwert 540 wird in dem Speicher 120 des mobilen, tragbaren Kommunikationssystems 100 gespeichert.

Muss sich der Nutzer authentifizieren, wird der mindestens eine Konfidenzwert 540 aus dem Speicher 120 ausgelesen und verarbeitet. Dabei wird das Klassifikationsergebnis 600 generiert.

Ist der Nutzer gemäß dem Klassifikationsergebnis 600 authentifiziert, so werden die Daten 500, die zu der erfolgreichen Authentifizierung beigetragen haben, in dem Speicher 120 des mobilen, tragbaren Kommunikationssystems 100 gespeichert bzw. zu einem in dem Speicher 120 gespeicherten Vergleichsdatensatz hinzugefügt, um für zukünftige Authentifizierungsversuche bei der Generierung der zukünftigen Konfidenzwerte 540 verwendet zu werden.

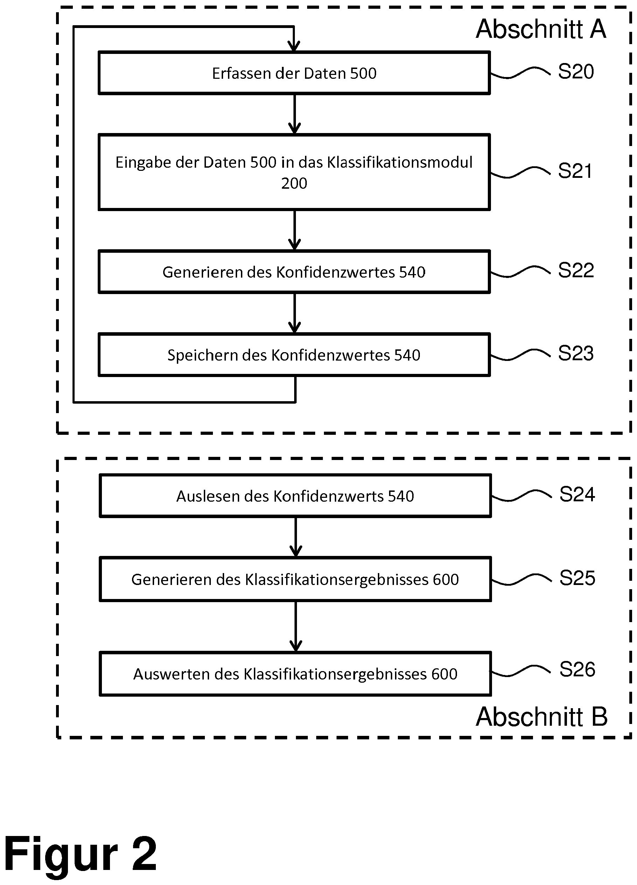

Figur 2 zeigt die verhaltensbasierte Authentifizierung eines Nutzers in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das mobile, tragbare Kommunikationssystem 100 erfasst in Schritt S20 die Daten 500. Die Daten 500 werden in Schritt S21 in das Klassifikationsmodul 200 eingegeben. Aus den Daten 500 generiert das Klassifikationsmodul 200 in Schritt S22 den mindestens einen Konfidenzwert 540. Der mindestens eine generierte Konfidenzwert 540 wird in Schritt S23 in dem Speicher 120 des mobilen, tragbaren Klassifikationssystems 100 gespeichert. Das mobile, tragbare Kommunikationssystem 100 erfasst dann neue Daten 500. Das ganze Verfahren gemäß Abschnitt A wird wiederholt ausgeführt.

In einer Ausführungsform erfasst das mobile, tragbare Kommunikationssystem 100 die Daten 500 als Datenstrom (Stream), wobei das Klassifikationsmodul 200 die Daten 500 als Stream empfängt und verarbeitet. Die Konfidenzwerte 540 werden dabei in sehr kurzen zeitlichen Abständen, die durch die Taktrate des Prozessors und/oder des Sensors vorgegeben werden, im Speicher 120 des mobilen, tragbaren Kommunikationssystems 100 abgespeichert.

Abschnitt B wird dann ausgeführt, wenn sich der Nutzer authentifizieren muss und eine Authentifizierungsanfrage an das Betriebssystem gesendet wurde. Die Authentifizierungsanfrage umfasst eine Anforderung zum Auslesen von mindestens einem Konfidenzwert 540 aus dem Speicher 120. Der mindestens eine Konfidenzwert 540 wird dann aus dem Speicher 120 in Schritt S24 ausgelesen.

Aus dem mindestens einen Konfidenzwert 540 wird in Schritt S25 das Klassifikationsergebnis 600 generiert. Anschließend wird das Klassifikationsergebnis 600 in Schritt S26 ausgewertet. Eine Auswertung des Klassifikationsergebnisses 600 umfasst beispielsweise das Prüfen des Klassifikationsergebnisses 600 gegen ein Prüfungskriterium. Erfüllt das Klassifikationsergebnis 600 das Prüfungskriterium 800, so wird gemäß einer Ausführungsform ein Authentifizierungssignal erzeugt. Erfüllt das Klassifikationsergebnis 600 das Prüfungskriterium 800 nicht, so wird kein Authentifizierungssignal erzeugt.

Ist der Nutzer gemäß dem Klassifikationsergebnis 600 authentifiziert, wodurch ein Senden eines Authentifizierungssignals veranlasst wurde, so werden die Daten 500, die zu der erfolgreichen Authentifizierung beigetragen haben, in dem Speicher 120 des mobilen, tragbaren Kommunikationssystems gespeichert bzw. zu einem Vergleichsdatensatz hinzugefügt, um für zukünftige Authentifizierungsversuche bei der Generierung zukünftiger Klassifikationsergebnisse 600 verwendet zu werden.

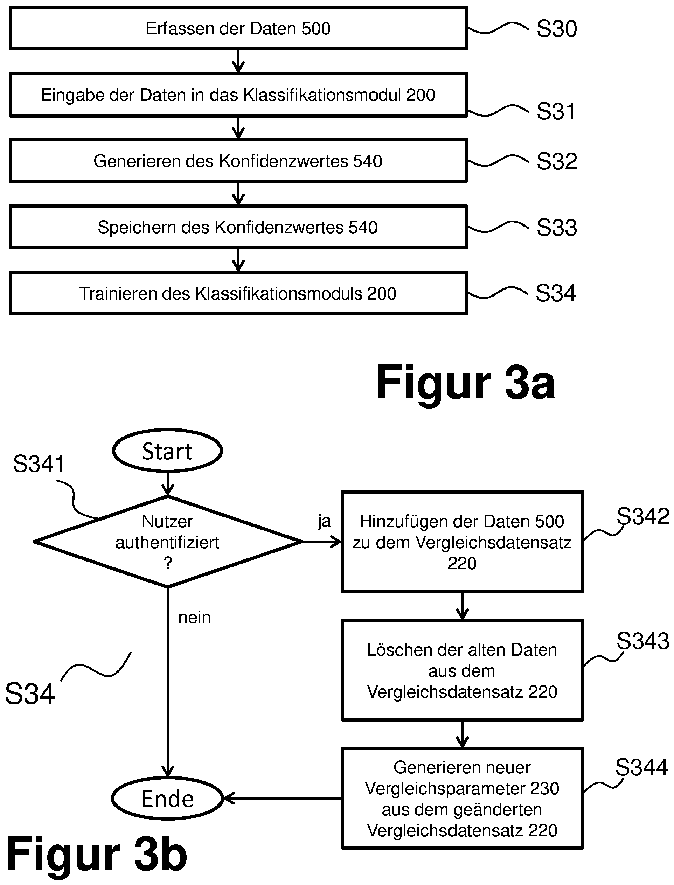

Figur 3a zeigt ein Ablaufdiagramm, welches die Verfahrensschleife A gemäß Figur 2 darstellt. In Schritt S30 werden die Daten 500 erfasst. Die erfassten Daten 500werden in Schritt S31 in das Klassifikationsmodul 200 eingegeben. Die grobmotorischen Bewegungsdaten werden in das Grobmotorikklassifikationsmodul eingegeben. Die feinmotorischen Bewegungsdaten werden in das Feinmotorikklassifikationsmodul eingegeben. Die Anwendungsdaten werden in das Anwendungsverhaltensklassifikationsmodul eingegeben.

In Schritt S32 generiert die Klassifikationsmodul 200 mindestens einen Konfidenzwert 540. Beispielsweise wird ein Konfidenzwert 540 generiert, welcher die Auswertung der grobmotorischen Bewegungsdaten, die feinmotorischen Bewegungsdaten und/oder die Anwendungsdaten umfasst. Der mindestens eine generierte Konfidenzwert 540 wird in Schritt S33 in dem Speicher 120 des mobilen, tragbaren Kommunikationssystems 100 gespeichert. Schließlich wird das Klassifikationsmodul 200 in Schritt S34 trainiert, wobei das Training von dem Klassifikationsergebnis 600 (vgl. Figur 2) abhängt.

Figur 3b zeigt das Training gemäß Schritt S34 der Figur 3a im Detail. Zunächst wird geprüft, ob sich der Nutzer durch das Klassifikationsergebnis 600 authentifizieren konnte. Ist dies nicht der Fall, so werden die erfassten Daten 500 verworfen und es findet kein Training statt.

War die Authentifizierung des Nutzers erfolgreich, werden die Daten 500 einem entsprechenden Vergleichsdatensatz 220 hinzugefügt und somit in dem Speicher 120 des mobilen, tragbaren Kommunikationssystems gespeichert. Beispielsweise umfasst der Speicher 120 separate Vergleichsdatensätze 200 für die grobmotorischen Bewegungsdaten, die feinmotorischen Bewegungsdaten und/oder die Anwendungsdaten. Beispielsweise umfasst der Speicher 120 einen Vergleichsdatensatz für die Daten 500.

In einer Ausführungsform wird nun geprüft, ob der oder die Vergleichsdatensätze 220 Daten 500 enthalten, welche älter als ein bestimmtes Schwellenalter sind. Das Schwellenalter ist beispielsweise durch den Nutzer, das System 150 oder das mobile, tragbare Kommunikationssystem 100 festgelegt. Beispielsweise kann dieses Schwellenalter Tage, Wochen, Monate oder Jahre betragen. Beispielsweise beträgt es vier Wochen, drei Monate oder ein Jahr.

Haben sich die Vergleichsdatensätze 220 durch das Hinzufügen neuer Daten 500 und/oder das Löschen alter Daten 500 verändert, werden die jeweiligen Vergleichsparameter 230 erneut bestimmt. Diese neuen Vergleichsparameter 230 werden beispielsweise in dem Speicher 120 des mobilen, tragbaren Kommunikationssystems 100 gespeichert und stehen bei einem nächsten Authentifizierungsversuch dem Klassifikationsmodul 200 zur Verfügung. Alternativ werden die Vergleichsparameter 230 bei jedem Authentifizierungsversuch neu berechnet, so dass sichergestellt werden kann, das stets aktuelle auf den berechtigten bzw. registrierten Nutzer trainierte Vergleichsparameter 230 für die Authentifizierung verwendet werden.

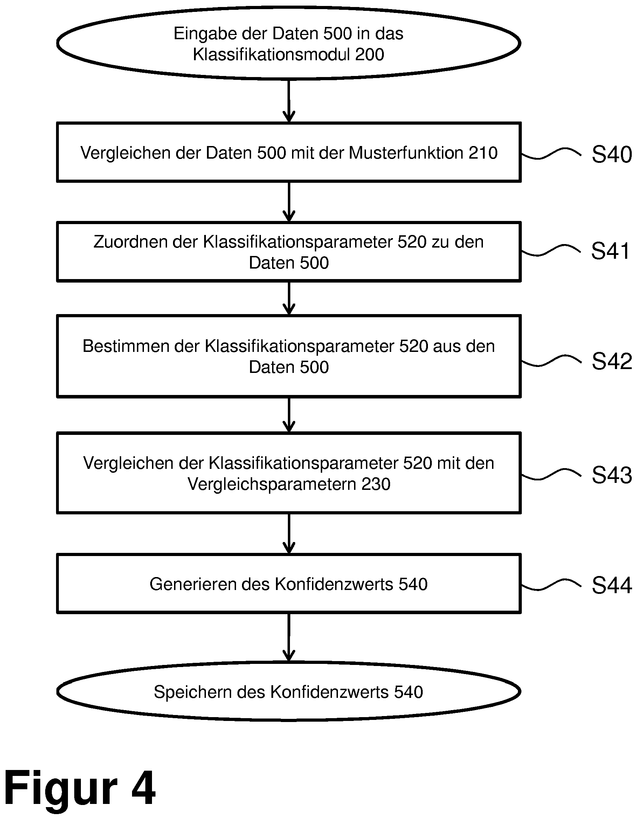

Figur 4 zeigt den schematischen Ablauf zur Generierung des Konfidenzwertes 540 aus den Daten 500. Zunächst erfasst ein Sensor oder eine Anwendung die Daten 500. Die Daten 500 werden dann an das Klassifikationsmodul 200 gesendet. Das Klassifikationsmodul 200 ruft aus dem Speicher eine Musterfunktion 210 ab und vergleicht in Schritt S40 die Musterfunktion 210 mit den Daten 500. Die Daten 500 werden in Schritt S41 einer Musterfunktion 210 zugeordnet. Auf das Zuordnen der Musterfunktion 210 hin, werden in Schritt S42 die der Musterfunktion 210 zugeordneten Klassifikationsparameter 520 aus den Daten 500 bestimmt.

In dem Speicher 120 des mobilen, tragbaren Kommunikationssystems 100 ist ein Vergleichsdatensatz 220 gespeichert, welcher Daten umfasst, wobei die Daten des Vergleichsdatensatzes 220 die Struktur der Daten 500 aufweisen. Dem Vergleichsdatensatz 220 sind Vergleichsparameter 230 zugeordnet, welche aus den Daten des Vergleichsdatensatzes 220 errechnet wurden. Das Klassifikationsmodul 200 liest die Vergleichsparameter 230 aus dem Speicher 120 des mobilen, tragbaren Kommunikationssystems aus und vergleicht die Vergleichsparameter 230 mit den Klassifikationsparametern 520 in Schritt S43. Aus dem Unterschied generiert das Klassifikationsmodul 200 in Schritt S44 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Die Konfidenzwerte 540 werden dann gemäß einer Ausführungsform, zum Beispiel durch Bildung des Mittelwerts, des Medians, des Modus oder durch eine komplexere Berechnung, zu einem resultierenden Konfidenzwert zusammengefasst. Der resultierende Konfidenzwert wird in dem Speicher 120 des mobilen, tragbaren Kommunikationssystems 100 gespeichert. Bei einer Authentifizierungsanfrage wird der resultierende Konfidenzwert aus dem Speicher 120 des mobilen, tragbaren Kommunikationssystems 100 ausgelesen.

In einer weiteren Ausführungsform wird der mindestens eine Konfidenzwert 540 im Speicher 120 des mobilen, tragbaren Kommunikationssystems 100 gespeichert und kann bei einer Authentifizierungsanfrage ausgelesen werden.

Ist der Nutzer gemäß dem Klassifikationsergebnis 600 authentifiziert, so werden die Daten 500, die zu der erfolgreichen Authentifizierung beitrugen, in dem Speicher 120 des mobilen, tragbaren Kommunikationssystems hinzugefügt, um für zukünftige Authentifizierungsversuche bei der Generierung der zukünftigen Konfidenzwerte 540 verwendet zu werden.

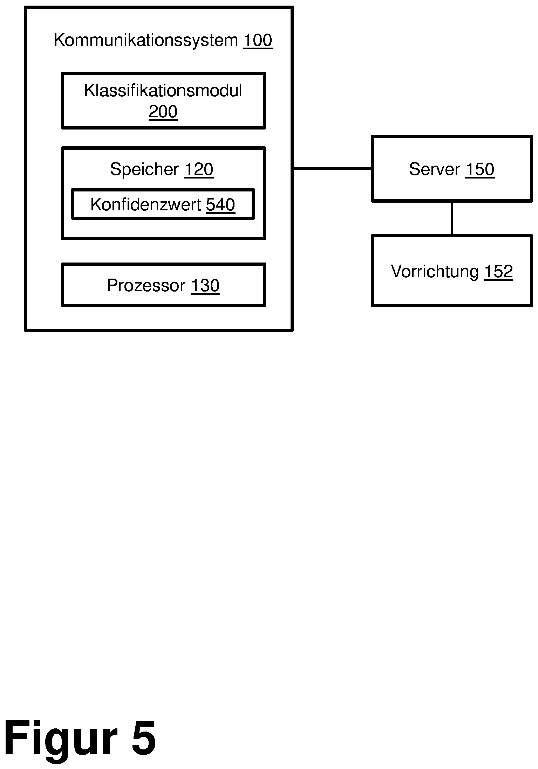

Figur 5 zeigt den schematischen Aufbau einer beispielhaften Ausführungsform. Das Kommunikationssystem 100 ist mit dem Server 150 kommunikativ verbunden, wobei der Server kommunikativ mit der Vorrichtung 152 verbunden ist.

Die kommunikative Verbindung zwischen dem Server und dem mobilen, tragbaren Kommunikationssystem kann nach Ausführungsformen als Drahtlosverbindung ausgebildet sein. Die Drahtlosverbindung kann beispielsweise eine Verbindung über Bluetooth, kabelloses, lokales Netzwerk (WLAN), Radio Frequency Identification (RFID) oder Near Field Communication (NFC) umfassen.

Das mobile, tragbare Kommunikationssystem 100 liest den Konfidenzwert 540 aus dem Speicher 120 aus und generiert aus dem Konfidenzwert 540 mittels des Prozessors 130 das Klassifikationsergebnis 600. Das Klassifikationsergebnis 600 wird an den Server 150 gesendet, welcher das Klassifikationsergebnis 600 gegen ein Prüfungskriterium prüft. Ist das Prüfungskriterium erfüllt, steuert der Server 150 die Vorrichtung 152 mittels eines Steuersignals über eine kommunikative Verbindung an.

Die kommunikative Verbindung zwischen dem Server 150 und der Vorrichtung 152 kann nach Ausführungsformen als Netzwerk, zum Beispiel als Internet oder Intranet, ausgebildet sein. Ferner kann der Server 150 nach weiteren Ausführungsformen als Bauteil in der Vorrichtung 152 selbst verbaut sein.

Das Steuersignal umfasst mindestens einen nötigen Befehl, um die Vorrichtung 152 ordnungsgemäß anzusteuern, ihren Betrieb zu gewährleisten, einzuleiten, und/oder zu beenden.

Nach einer weiteren Ausführungsform sendet der Server 150 ein Authentifizierungssignal an das mobile, tragbare Kommunikationssystem 100, welches dem Nutzer über eine Mensch-Maschine-Interaktionsschnittstelle wie beispielsweise ein Bildschirm oder ein Leuchtmittel die erfolgreiche Authentifizierung und/oder das erfolgreiche Ansteuern der Vorrichtung 152 signalisiert. Nach einer weiteren Ausführungsform zeigen der Server 150 oder die Vorrichtung 152 selbst die erfolgreiche Authentifizierung und das erfolgreiche Ansteuern der Vorrichtung 152 an. Das Authentifizierungssignal kann gemäß dieser Ausführungsform zudem an das mobile, tragbare Kommunikationssystem 100 gesendet werden, woraufhin dem Nutzer eine erfolgreiche Authentifizierung und Ansteuerung der Vorrichtung 152 zusätzlich über das mobile, tragbare Kommunikationssystem 100 signalisiert wird.

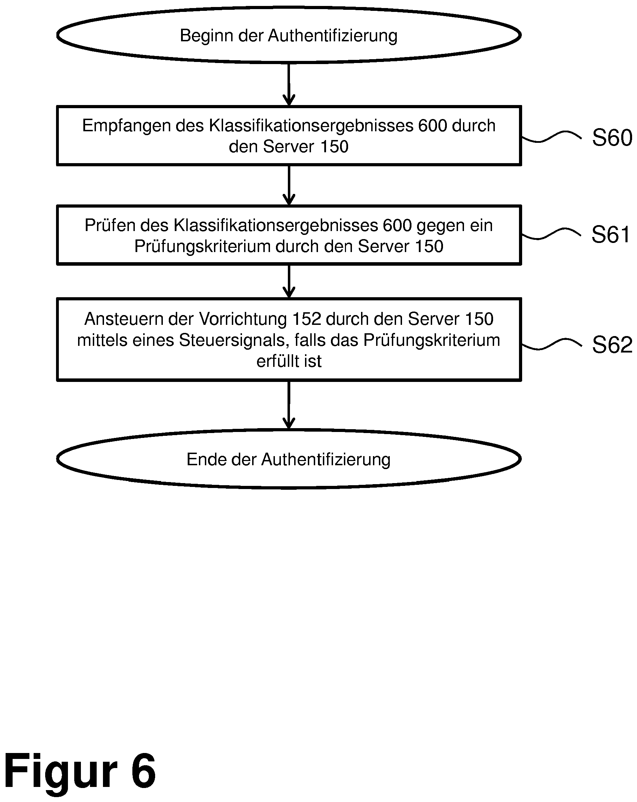

Figur 6 zeigt in einem Ablaufdiagramm die Schritte der Authentifizierung. Der Server 150 empfängt das Klassifikationsergebnis 600 von dem mobilen, tragbaren Kommunikationssystem 100 in Schritt S60. Die Übertragung des Klassifikationsergebnisses 600 von dem mobilen, tragbaren Kommunikationssystem 100 zu dem Server 150 kann nach Ausführungsformen verschlüsselt und/oder mittels einer Signatur durch den Server erfolgen. Die Verschlüsselung kann dabei beispielsweise ein symmetrisches Verschlüsselungsverfahren, ein asymmetrisches Verschlüsselungsverfahren oder eine Hybridverschlüsselung umfassen.

Der Server 150 prüft in Schritt S61 das Klassifikationsergebnis 600 gegen ein Prüfungskriterium. Das Prüfungskriterium kann nach Ausführungsformen dadurch bestimmt sein, welche Vorrichtung der Nutzer anzusteuern versucht. Eine Enge des Prüfungskriteriums bezeichnet den Grad der nötigen Sicherheit, um den Nutzer erfolgreich zu authentifizieren.

Ein enges Prüfungskriterium kann beispielsweise verwendet werden, um den Nutzer gegenüber sensiblen Vorrichtungen zu authentifizieren. Eine sensible Vorrichtung kann beispielsweise, ohne darauf beschränkt zu sein, als ein Fahrzeug, ein Flugzeug oder eine Haustür ausgebildet sein. Sensibel bedeutet in diesem Zusammenhang, dass ein unbefugter Zugriff auf die entsprechende Vorrichtung einen großen Schaden an dem Nutzer, der Umwelt und/oder der Vorrichtung selbst verursachen kann.

Ein weniger enges Prüfungskriterium hingegen kann verwendet werden, um den Nutzer gegenüber einer weniger sensiblen Vorrichtung zu authentifizieren. Eine weniger sensible Vorrichtung kann beispielsweise als eine Musikanlage, ein Fernsehoder Videogerät oder eine Beleuchtungsanlage ausgebildet sein.

Ist das Prüfungskriterium durch das Klassifikationsergebnisses 600 erfüllt, so gilt der Nutzer als authentifiziert. Der Server 150 sendet daraufhin in Schritt S62 ein Steuersignal an die Vorrichtung 152, um die Vorrichtung anzusteuern. Sind die Vorrichtung 152 und der Server 150 über ein Netzwerk miteinander verbunden, kann nach Ausführungsformen das Steuersignal verschlüsselt gesendet werden. Das Steuersignal kann symmetrisch oder asymmetrisch verschlüsselt werden. Nach weiteren Ausführungsformen kann das Steuersignal signiert sein oder mittels einem Hybrid-Verfahren signiert und verschlüsselt gesendet werden.

Nach Ausführungsformen sendet der Server 150 auf das erfolgreiche Authentifizieren des Nutzers hin ein Authentifizierungssignal an das mobile, tragbare Kommunikationssystem 100. Das mobile, tragbare Kommunikationssystem 100 kann daraufhin dem Nutzer die erfolgreiche Authentifizierung signalisieren.

### Bezugszeichenliste

- 100:: Kommunikationssystem
- 120:: Speicher
- 130:: Prozessor
- 150:: System
- 152:: Vorrichtung
- 200:: Klassifikationsmodul
- 210:: Musterfunktion
- 220:: Vergleichsdatensatz
- 230:: Vergleichsparameter
- 500:: Daten
- 520:: Klassifikationsparameter
- 540:: Konfidenzwerte
- 600:: Klassifikationsergebnis
- S20:: Erfassen der Daten
- S21:: Eingabe der Daten in das Klassifikationsmodul
- S22:: Generieren des Konfidenzwertes
- S23:: Speichern des Konfidenzwertes
- S24:: Auslesen des Konfidenzwertes
- S25:: Generieren des Klassifikationsergebnisses
- S26:: Auswerten des Klassifikationsergebnisses
- S30:: Erfassend er Daten
- S31:: Eingabe der Daten in das Klassifikationsmodul
- S32:: Generieren des Konfidenzwertes
- S33:: Speichern des Konfidenzwertes
- S34:: Trainieren des Klassifikationsmoduls
- S341:: Prüfen ob der Nutzer Authentifiziert ist
- S342:: Generieren neuer Vergleichsparameter
- S343:: Hinzufügen der Daten zu dem Vergleichsdatensatz
- S344:: Löschen der alten Daten
- S40:: Vergleichen der Daten
- S41:: Zuordnen der Klassifikationsparameter
- S42:: Bestimmen der Klassifikationsparameter
- S43:: Vergleichen der Klassifikationsparameter
- S44:: Generieren des Konfidenzwerts
- S60:: Empfangen des Klassifikationsergebnisses
- S61:: Prüfen des Klassifikationsergebnisses
- S62:: Ansteuern der Vorrichtung

## Patentansprüche

1. Verfahren zur Authentifizierung (400) eines aktuellen Nutzers eines mobilen, tragbaren Kommunikationssystems (100) gegenüber einem Server (150) mittels einer verhaltensbasierten Authentifizierung,
wobei der Server (150) eine erste Schnittstelle und eine zweite Schnittstelle aufweist, wobei die erste Schnittstelle konfiguriert ist mit mindestens einer ansteuerbaren Vorrichtung (152) zu kommunizieren und die zweite Schnittstelle konfiguriert ist, mit einem mobilen, tragbaren Kommunikationssystem (100) zu kommunizieren,
wobei das Verfahren umfasst:
- Empfangen von mindestens einem Klassifikationsergebnis (600) durch den Server (150) von dem mobilen, tragbaren Kommunikationssystem (100), wobei das Klassifikationsergebnis (600) auf dem Verhalten des Nutzers basiert,
- Auswerten des mindestens einen Klassifikationsergebnisses (600) gemäß einem vorgegebenen Prüfungskriterium (800) durch den Server, um den Nutzer gegenüber dem Server (150) zu authentifizieren,
- falls das Prüfungskriterium erfüllt ist und der Nutzer als authentifiziert gilt, Ansteuern der Vorrichtung (152) mittels eines Steuersignals durch den Server (150),
wobei die verhaltensbasierte Authentifizierung von dem mobilen, tragbaren Kommunikationssystem (100) durchgeführt wird, welches mindestens einen Sensor (110) zur Erfassung von grobmotorischen Messdaten (500), ein Grobmotorikklassifikationsmodul (200), einen Prozessor (130) und einen internen Speicher (120) aufweist,
wobei der Sensor (110) zur Erfassung der grobmotorischen Messdaten (500) einer grobmotorischen Bewegung eines aktuellen Nutzers des mobilen, tragbaren Kommunikationssystems (100) ausgebildet ist,
wobei das Grobmotorikklassifikationsmodul (200) zur Erkennung eines generischen grobmotorischen Bewegungsmusters mit Hilfe von Trainingsdatensätzen einer Nutzerkohorte trainiert ist, wobei das Grobmotorikklassifikationsmodul (200) durch den Prozessor (130) des mobilen, tragbaren Kommunikationssystems (100) ausgeführt wird,
wobei die verhaltensbasierte Authentifizierung die folgenden Schritte aufweist:
a) Wiederholtes Ausführen der folgenden Schritte:
i. Erfassen der grobmotorischen Messdaten (500) durch den mindestens einen Sensor (110) des mobilen, tragbaren Kommunikationssystems (100), wobei die grobmotorischen Messdaten (500) die Bewegungsdaten der grobmotorischen Bewegung des aktuellen Nutzers sind,
ii. Eingabe der grobmotorischen Messdaten (500) in das Grobmotorikklassifikationsmodul (200),
iii. Generieren mindestens eines ersten Konfidenzwertes (540) durch das Grobmotorikklassifikationsmodul (200),
iv. Speichern des mindestens einen ersten Konfidenzwertes (540) in dem Speicher (120) des mobilen, tragbaren Kommunikationssystems (100),
b) auf eine Authentifizierungsanfrage hin, Zugreifen auf den Speicher (120) des mobilen, tragbaren Kommunikationssystems (100), um mindestens einen der gespeicherten ersten Konfidenzwerte (540) aus dem Speicher (120) auszulesen,
c) Generieren des Klassifikationsergebnisses (600) unter Verwendung des mindestens einen ersten Konfidenzwertes (540),
d) Senden des Klassifikationsergebnisses (600) an den Server (150),
wobei in dem Speicher (120) des mobilen, tragbaren Kommunikationssystems (100) mindestens ein erstes Muster in Form einer ersten Musterfunktion (210) und mindestens ein erster Vergleichsdatensatz (220) gespeichert sind,
wobei der erste Vergleichsdatensatz (220) eine Mehrzahl der grobmotorischen Messdaten (500) umfasst, wobei aus der Mehrzahl der grobmotorischen Messdaten (500) des ersten Vergleichsdatensatzes (220) mindestens ein erster Vergleichsparameter (230) errechnet wird,
wobei das Grobmotorikklassifikationsmodul (200) auf die Eingabe der grobmotorischen Messdaten (500) hin die folgenden Schritte ausführt:
a) Vergleich der erfassten grobmotorischen Messdaten (500) mit der mindestens einen ersten Musterfunktion (210),
b) Zuordnen der grobmotorischen Messdaten (500) zu dem der ersten Musterfunktion (210) zugeordneten ersten Muster und erhalten von mindestens einem dem ersten Muster entsprechenden ersten Klassifikationsparameter (230), falls die grobmotorischen Messdaten (500) dem mindestens einen, ersten Muster zugeordnet werden können,
c) Errechnen eines Konfidenzwertes (540) für jeden ersten Klassifikationsparameter (230) durch einen Vergleich des mindestens einen ersten Klassifikationsparameters (230) mit dem jeweiligen ersten Vergleichsparameter (230) des ersten Vergleichsdatensatzes (220),
wobei die grobmotorischen Messdaten (500) im Speicher des mobilen tragbaren Kommunikationssystems gespeichert werden, wenn das aus den grobmotorischen Messdaten (500) resultierende Klassifikationsergebnis erfolgreich zur Authentifizierung des Nutzers beigetragen hat, wobei das Speichern der grobmotorischen Messdaten (500) erfolgt, indem die grobmotorischen Messdaten (500) dem ersten Vergleichsdatensatz (220) hinzugefügt werden,
wobei der erste Vergleichsparameter (230) erneut aus dem nun modifizierten ersten Vergleichsdatensatz (220) errechnet wird, um eine nächste Authentifizierung des Nutzers mit einem aktuellen ersten Vergleichsparameter (230) durchführen zu können.

2. Verfahren (400) nach Anspruch 1, wobei das mobile, tragbare Kommunikationssystem (100) ein Anwendungsverhaltensklassifikationsmodul (200) aufweist,
wobei das Anwendungsverhaltensklassifikationsmodul (200) von dem Prozessor (130) des mobilen, tragbaren Kommunikationssystems (100) ausgeführt wird,
wobei die verhaltensbasierte Authentifizierung ferner umfasst:
a) Wiederholtes Ausführen der folgenden Schritte:
i. Erfassen von Anwendungsdaten (550),
ii. Eingabe der Anwendungsdaten (550) in das Anwendungsverhaltensklassifikationsmodul (200),
iii. Generieren mindestens eines zweiten Konfidenzwertes (540) durch das Anwendungsverhaltensklassifikationsmodul (200)
iv. Speichern des mindestens einen zweiten Konfidenzwertes (540) im Speicher (120) des mobilen, tragbaren Kommunikationssystems (100),
b) Zugreifen auf den Speicher (120) des mobilen, tragbaren Kommunikationssystems (100), um mindestens einen der gespeicherten zweiten Konfidenzwerte (540) aus dem Speicher (120) auszulesen,
wobei für die Generierung des Klassifikationsergebnisses (600) der mindestens eine zweite Konfidenzwert (540) verwendet wird,
wobei die Anwendungsdaten (550) vorzugsweise umfassen können:
- Positionsdaten des mobilen, tragbaren Kommunikationssystems (100), welche durch ein Verfahren zur Positionsbestimmung durch einen Sensor (110) zur Bestimmung der Position des mobilen, tragbaren Kommunikationssystems (100) erfasst werden, und/oder
- Anwendungsnutzungsdaten des aktuellen Nutzers (1), und/oder
- biometrischen Daten des aktuellen Nutzers (1), welche durch einen Sensor (110) zur Erfassung von biometrischen Daten erfasst werden, und/oder
- Verbindungsdaten des mobilen, tragbaren Kommunikationssystems (100) mit anderen Geräten und/oder
- Kalender- und/oder Uhrzeitdaten einer im mobilen, tragbaren Kommunikationssystem (100) implementierten Uhr oder einer externen Uhr, deren Signal durch einen Sensor (110) des mobilen, tragbaren Kommunikationssystems (100) empfangen wird.

3. Verfahren (400) nach einem der Ansprüche 1-2, wobei das mobile, tragbare Kommunikationssystem (100) ein Feinmotorikklassifikationsmodul (200) aufweist,
wobei das Feinmotorikklassifikationsmodul (200) für eine Klassifikation von feinmotorischen Messdaten (502) konfiguriert und auf ein Erkennen einer feinmotorischen Bewegung eines registrierten Nutzers trainiert ist, wobei das Feinmotorikklassifikationsmodul (200) von dem Prozessor (130) des mobilen, tragbaren Kommunikationssystems (100) ausgeführt wird,
wobei die verhaltensbasierte Authentifizierung ferner umfasst:
a) Wiederholtes Ausführen der folgenden:
i. Erfassen der feinmotorischen Messdaten (502),
ii. Eingabe der feinmotorischen Messdaten (502) in das Feinmotorikklassifikationsmodul (200),
iii. Generieren mindestens eines dritten Konfidenzwert (540) durch das Feinmotorikklassifikationsmodul (200),
iv. Speichern des mindestens einen dritten Konfidenzwertes (540) in dem Speicher (120) des mobilen, tragbaren Kommunikationssystems (100),
b) Zugreifen auf den Speicher (120) des mobilen, tragbaren Kommunikationssystems (100), um mindestens einen der gespeicherten dritten Konfidenzwerte (540) aus dem Speicher (120) auszulesen,
wobei für die Generierung des Klassifikationsergebnisses (600) auch der mindestens eine dritte Konfidenzwert (540) verwendet wird.

4. Verfahren (400) nach einem der Ansprüche 1-3, wobei die verhaltensbasierte Authentifizierung ferner das Trainieren des Grobmotorikklassifikationsmoduls (200) mit den grobmotorischen Messdaten (500) des aktuellen Nutzers umfasst,
wobei das Grobmotorikklassifikationsmodul (200) auf das nutzerspezifische grobmotorische Bewegungsmuster des aktuellen Nutzers unter der Voraussetzung trainiert wird, dass gemäß dem Klassifikationsergebnis (600) der aktuelle Nutzer der im mobilen, tragbaren Kommunikationssystem (100) registrierte Nutzer ist, und/oder
das Trainieren des Anwendungsverhaltensklassifikationsmoduls (200) mit den Anwendungsdaten (550) des aktuellen Nutzers (1), wobei das Anwendungsverhaltensklassifikationsmodul (200) auf das nutzerspezifische Anwendungsverhaltensmuster des aktuellen Nutzers unter der Voraussetzung trainiert wird, dass gemäß dem Klassifikationsergebnis (600) der aktuelle Nutzer der im System registrierte Nutzer ist, und/oder
das Trainieren des Feinmotorikklassifikationsmoduls (200) mit den feinmotorischen Messdaten (502) des aktuellen Nutzers (1), wobei das Feinmotorikklassifikationsmodul (200) auf das nutzerspezifisches feinmotorisches Bewegungsmuster des aktuellen Nutzers unter der Voraussetzung trainiert wird, dass nach dem Klassifikationsergebnis (600) der aktuelle Nutzer der im System registrierte Nutzer ist.

5. Verfahren (400) nach einem der Ansprüche 1-4, wobei der Schritt des Trainierens ein Hinzufügen der erfassten grobmotorischen Messdaten (500) zu dem ersten Vergleichsdatensatz (220) umfasst.

6. Verfahren (400) nach einem der Ansprüche 2-5, wobei in dem Speicher (120) des mobilen, tragbaren Kommunikationssystems (100) mindestens ein zweites Muster in Form einer zweiten Musterfunktion (210) und mindestens ein zweiter Vergleichsdatensatz (220) gespeichert sind,
wobei der zweite Vergleichsdatensatz (220) eine Mehrzahl der Anwendungsdaten (550) umfasst, wobei aus der Mehrzahl der Anwendungsdaten (550) des zweiten Vergleichsdatensatzes (220) mindestens ein zweiter Vergleichsparameter (230) errechnet wird,
wobei das Anwendungsverhaltensklassifikationsmodul (200) auf die Eingabe der Anwendungsdaten (550) hin die folgenden Schritte ausführt:
a) Vergleich der erfassten Anwendungsdaten (550) mit der mindestens einen zweiten Musterfunktion (210),
b) Zuordnen der Anwendungsdaten (550) zu dem der zweiten Musterfunktion (210) zugeordneten zweiten Muster und erhalten von mindestens einem dem zweiten Muster entsprechenden zweiten Klassifikationsparameter (520), falls die Anwendungsdaten (550) dem mindesten einen, zweiten Muster zugeordnet werden können,
c) Errechnen eines Konfidenzwertes (540) für jeden der zweiten Klassifikationsparameter (520) durch einen Vergleich der zweiten Klassifikationsparameter (520) mit dem jeweiligen zweiten Vergleichsparameter (520) des zweiten Vergleichsdatensatzes (220),
und wobei der Schritt des Trainierens ein Hinzufügen der erfassten Anwendungsdaten (550) zu dem zweiten Vergleichsdatensatz (220) umfasst.

7. Verfahren (400) nach einem der Ansprüche 3-6, wobei in dem Speicher (120) des mobilen, tragbaren Kommunikationssystems (100) mindestens ein drittes Muster in Form einer dritten Musterfunktion (210) und mindestens ein dritter Vergleichsdatensatz (220) gespeichert sind, wobei der dritte Vergleichsdatensatz (220) Werte für mindestens einen dritten Vergleichsparameter (520) umfasst, wobei das Feinmotorikklassifikationsmodul (200) auf die Eingabe der feinmotorischen Messdaten (502) hin die folgenden Schritte ausführt:
a) Vergleich der erfassten feinmotorischen Messdaten (502) mit der mindestens einen dritten Musterfunktion (210),
b) Zuordnen der feinmotorischen Messdaten (502) zu dem der dritten Musterfunktion (210) zugeordneten dritten Muster und erhalten von mindestens einem dem dritten Muster entsprechenden dritten Klassifikationsparameter (520), falls die feinmotorischen Messdaten (502) dem mindesten einen, dritten Muster zugeordnet werden können,
c) Errechnen eines Konfidenzwertes (540) für jeden der dritten Klassifikationsparameter (520) durch einen Vergleich der dritten Klassifikationsparameter (520) mit dem jeweiligen dritten Vergleichsparameter (520) des dritten Vergleichsdatensatzes (220),
und wobei der Schritt des Trainierens ein Hinzufügen der erfassten feinmotorischen Messdaten (502) zu dem dritten Vergleichsdatensatz (220) umfasst.

8. Verfahren (400) nach einem der Ansprüche 1-7, wobei das Prüfungskriterium (800) erfüllt ist, falls:
- das mindestens eine Klassifikationsergebnis (600) einen durch das Prüfungskriterium (800) vorgegebenen Schwellenwert überschreitet und/oder
- ein durch das Prüfungskriterium (800) vorgegebenes Höchstalter des mindestens einen Klassifikationsergebnisses (600) nicht überschritten werden und/oder
- eine Mindestanzahl an Klassifikationsergebnissen (600) vorliegt, welche den Schwellenwert überschreitet.

9. Verfahren (400) nach einem der Ansprüche 5-8, wobei die grobmotorischen Messdaten (500), welche Teil des ersten Vergleichsdatensatzes (220) und älter als eine festgelegte Zeit sind, aus dem ersten Vergleichsdatensatz (220) entfernt werden und aus dem Speicher (120) des mobilen, tragbaren Kommunikationssystems (100) gelöscht werden und die Anwendungsdaten (550), welche Teil des zweiten Vergleichsdatensatzes (220) und älter als die festgelegte Zeit sind, aus dem zweiten Vergleichsdatensatz (220) entfernt werden und aus dem Speicher (120) des mobilen, tragbaren Kommunikationssystems (100) gelöscht werden und die feinmotorischen Messdaten (502), welche Teil des dritten Vergleichsdatensatzes (220) und älter als die festgelegte Zeit sind, aus dem dritten Vergleichsdatensatz (220) entfernt werden und aus dem Speicher (120) des mobilen, tragbaren Kommunikationssystems (100) gelöscht werden.

10. Verfahren (400) nach einem der vorherigen Ansprüche, wobei sich der aktuelle Nutzer des mobilen, tragbaren Kommunikationssystems (100) nach einer Erstinbetriebnahme des mobilen, tragbaren Kommunikationssystems (100) gegenüber dem Server (150) authentifizieren muss, und/oder
wobei das mobile, tragbare Kommunikationssystem (100) nach der Erstinbetriebnahme ein Signal an den aktuellen Nutzer sendet, welches eine Aufforderung zu einer Personalisierung des mobilen, tragbaren Kommunikationssystems (100) durch eine Generierung des mindestens einen ersten und/oder zweiten und/oder dritten Vergleichsdatensatzes (220) durch den aktuellen Nutzer enthält.

11. Verfahren (400) nach einem der Ansprüche 2-10, wobei bei der Generierung des Klassifikationsergebnisses (600) der mindestens eine zweite Konfidenzwert (540) nur dann mit einbezogen wird, wenn in einem der vorangegangenen Schritte das Grobmotorikklassifikationsmodul (200) in den grobmotorischen Messdaten (500) eine grobmotorische Bewegung des aktuellen Nutzers erkannt hat.

12. Verfahren (400) nach einem der Ansprüche 3-11, wobei bei der Auswertung des Klassifikationsergebnisses (600) der mindestens eine dritte Konfidenzwert (540) nur dann mit einbezogen wird, wenn in einem der vorangegangenen Schritte das Grobmotorikklassifikationsmodul (200) in den grobmotorischen Messdaten (500) eine grobmotorische Bewegung des aktuellen Nutzers erkannt hat.

13. Verfahren (400) nach einem der Ansprüche 6-12, wobei die Konfidenzwerte (540) zu einem resultierenden Konfidenzwert durch den Prozessor (130) des mobilen, tragbaren Kommunikationssystems (100) verarbeitet werden, wobei der resultierende Konfidenzwert eine Wahrscheinlichkeit angibt, mit der die Identität des aktuellen Nutzers mit der Identität des in dem mobilen, tragbaren Kommunikationssystems (100) registrierten Nutzers übereinstimmt, und/oder wobei die einzelnen Konfidenzwerte (540) der ersten, zweiten und/oder dritten Klassifikationsparameter (520) bei der Auswertung mit jeweils einem Gewichtungsfaktor versehen sind, wobei die Gewichtungsfaktoren dem jeweiligen Konfidenzwert (540) zugeordnet werden.

14. Verfahren (400) nach einem der Ansprüche 1-13, wobei auf dem mobilen, tragbaren Kommunikationssystem (100) mehrere Nutzer registriert sind und ein Klassifikationsergebnis (600) für jeden Nutzer generiert wird, wobei das mobile, tragbare Kommunikationssystem (100) ein Nutzererkennungsmodul aufweist, wobei das Nutzererkennungsmodul dazu konfiguriert ist den aktuellen Nutzer als einen der registrierten Nutzer zu identifizieren, wobei das Nutzererkennungsmodul von dem Prozessor (130) des mobilen, tragbaren Kommunikationssystems (100) ausgeführt wird.
wobei das Nutzererkennungsmodul vorzugsweise konfiguriert ist einen Nutzerwechsel anhand einer grob- und/oder feinmotorischen Bewegung zu erkennen,
wobei das Nutzererkennungsmodul für eine Klassifikation der grobmotorischen Messdaten (500) und/oder den feinmotorischen Messdaten (510) konfiguriert und auf ein Erkennen der grob- und/oder feinmotorischen Bewegung des Nutzerwechsels des mobilen, tragbaren Kommunikationssystems (100) trainiert ist, wobei das Nutzererkennungsmodul von dem Prozessor (130) des mobilen, tragbaren Kommunikationssystems (100) ausgeführt wird,
wobei die verhaltensbasierte Authentifizierung ferner umfasst:
a) Wiederholtes Ausführen der Schritte:
- Eingabe der der grobmotorischen Messdaten (500) und/oder feinmotorischen Messdaten (510) in das Nutzererkennungsmodul,
- Generieren mindestens eines vierten Konfidenzwertes (600) durch das Nutzererkennungsmodul,
- Speichern des mindestens einen vierten Konfidenzwertes (540) in dem Speicher (120) des mobilen, tragbaren Kommunikationssystems (100),
b) Zugreifen auf den Speicher (120) des mobilen, tragbaren Kommunikationssystems (100), um mindestens einen der gespeicherten vierten Konfidenzwerte (540) aus dem Speicher (120) auszulesen,
c) Auswerten des mindestens einen vierten Konfidenzwertes (540), um zu überprüfen, ob ein Nutzerwechsel stattgefunden hat,
d) Verwerfen der bisherigen Konfidenzwerte (540) falls ein Nutzerwechsel stattgefunden hat.

15. Verfahren (400) nach einem der vorherigen Ansprüche, wobei der Server (150) und das mobile, tragbare Kommunikationssystem (100) über eine kryptographisch gesicherte Drahtlosverbindung kommunizieren, und/oder
wobei der Server (150) und die Vorrichtung über ein Netzwerk miteinander kommunikativ verbunden sind, und/oder
wobei das Verfahren ferner das Senden eines Authentifizierungssignals an das mobile, tragbare Kommunikationssystem (100) durch den Server umfasst.

16. System zur Authentifizierung (400) eines aktuellen Nutzers eines mobilen, tragbaren Kommunikationssystems (100) gegenüber einem Server (150) mittels einer verhaltensbasierten Authentifizierung,
wobei das System das mobile, tragbare Kommunikationssystem (100), den Server (150) und mindestens eine ansteuerbare Vorrichtung (152) umfasst,
wobei der Server (150) eine erste Schnittstelle und eine zweite Schnittstelle aufweist, wobei die erste Schnittstelle konfiguriert ist mit der mindestens einen ansteuerbaren Vorrichtung (152) zu kommunizieren und die zweite Schnittstelle dazu ausgebildet ist, mit einem mobilen, tragbaren Kommunikationssystem (100) zu kommunizieren,
wobei das System dazu konfiguriert ist die folgenden Schritte auszuführen:
- Empfangen von mindestens einem Klassifikationsergebnis (600) durch den Server (150) von dem mobilen, tragbaren Kommunikationssystem (100),
- Auswerten des mindestens einen Klassifikationsergebnisses (600) gemäß einem vorgegebenen Prüfungskriterium (800) durch den Server,
- falls das Prüfungskriterium erfüllt ist und der Nutzer als authentifiziert gilt, Ansteuern der Vorrichtung (152) mittels eines Steuersignals durch den Server (150).
wobei das mobile, tragbare Kommunikationssystem (100) dazu konfiguriert ist, die verhaltensbasierte Authentifizierung durchzuführen, wobei das mobile, tragbare Kommunikationssystem (100) mindestens einen Sensor (110) zur Erfassung von grobmotorischen Messdaten (500), ein Grobmotorikklassifikationsmodul (200), einen Prozessor (130) und einen internen Speicher (120) aufweist,
wobei der Sensor (110) zur Erfassung der grobmotorischen Messdaten (500) einer grobmotorischen Bewegung eines aktuellen Nutzers des mobilen, tragbaren Kommunikationssystems (100) ausgebildet ist,
wobei das Grobmotorikklassifikationsmodul (200) zur Erkennung eines generischen grobmotorischen Bewegungsmusters mit Hilfe von Trainingsdatensätzen einer Nutzerkohorte trainiert ist, wobei das Grobmotorikklassifikationsmodul (200) durch den Prozessor (130) des mobilen, tragbaren Kommunikationssystems (100) ausgeführt wird,
wobei die verhaltensbasierte Authentifizierung die folgenden Schritte aufweist:
e) Wiederholtes Ausführen der folgenden Schritte:
i. Erfassen der grobmotorischen Messdaten (500) durch den mindestens einen Sensor (110) des mobilen, tragbaren Kommunikationssystems (100), wobei die grobmotorischen Messdaten (500) die Bewegungsdaten der grobmotorischen Bewegung des aktuellen Nutzers sind,
ii. Eingabe der grobmotorischen Messdaten (500) in das Grobmotorikklassifikationsmodul (200),
iii. Generieren mindestens eines ersten Konfidenzwertes (540) durch das Grobmotorikklassifikationsmodul (200),
iv. Speichern des mindestens einen ersten Konfidenzwertes (540) in dem Speicher (120) des mobilen, tragbaren Kommunikationssystems (100),
f) auf eine Authentifizierungsanfrage hin, Zugreifen auf den Speicher (120) des mobilen, tragbaren Kommunikationssystems (100), um mindestens einen der gespeicherten ersten Konfidenzwerte (540) aus dem Speicher (120) auszulesen,
g) Generieren des Klassifikationsergebnisses (600) unter Verwendung des mindestens einen ersten Konfidenzwertes (540),
h) Senden des Klassifikationsergebnisses (600) an den Server (150),
wobei in dem Speicher (120) des mobilen, tragbaren Kommunikationssystems (100) mindestens ein erstes Muster in Form einer ersten Musterfunktion (210) und mindestens ein erster Vergleichsdatensatz (220) gespeichert sind,
wobei der erste Vergleichsdatensatz (220) eine Mehrzahl der grobmotorischen Messdaten (500) umfasst, wobei aus der Mehrzahl der grobmotorischen Messdaten (500) des ersten Vergleichsdatensatzes (220) mindestens ein erster Vergleichsparameter (230) errechnet wird,
wobei das Grobmotorikklassifikationsmodul (200) auf die Eingabe der grobmotorischen Messdaten (500) hin die folgenden Schritte ausführt:
a) Vergleich der erfassten grobmotorischen Messdaten (500) mit der mindestens einen ersten Musterfunktion (210),
b) Zuordnen der grobmotorischen Messdaten (500) zu dem der ersten Musterfunktion (210) zugeordneten ersten Muster und erhalten von mindestens einem dem ersten Muster entsprechenden ersten Klassifikationsparameter (230), falls die grobmotorischen Messdaten (500) dem mindestens einen, ersten Muster zugeordnet werden können,
c) Errechnen eines Konfidenzwertes (540) für jeden ersten Klassifikationsparameter (230) durch einen Vergleich des mindestens einen ersten Klassifikationsparameters (230) mit dem jeweiligen ersten Vergleichsparameter (230) des ersten Vergleichsdatensatzes (220),
wobei die grobmotorischen Messdaten (500) im Speicher des mobilen tragbaren Kommunikationssystems gespeichert werden, wenn das aus den grobmotorischen Messdaten (500) resultierende Klassifikationsergebnis erfolgreich zur Authentifizierung des Nutzers beigetragen hat, wobei das Speichern der grobmotorischen Messdaten (500) erfolgt, indem die grobmotorischen Messdaten (500) dem ersten Vergleichsdatensatz (220) hinzugefügt werden,
wobei der erste Vergleichsparameter (230) erneut aus dem nun modifizierten ersten Vergleichsdatensatz (220) errechnet wird, um eine nächste Authentifizierung des Nutzers mit einem aktuellen ersten Vergleichsparameter (230) durchführen zu können.

17. System zur Authentifizierung (400) nach Anspruch 16, wobei der Server (150) und das mobile, tragbare Kommunikationssystem (100) über eine kryptographisch gesicherte Drahtlosverbindung kommunizieren.

## Claims

1. Method for authenticating (400) a current user of a mobile, portable communication system (100) to a server (150) by means of behavior-based authentication, wherein the server (150) comprises a first interface and a second interface, wherein the first interface is configured to communicate with at least one actuatable device (152) and the second interface is configured to communicate with a mobile, portable communication system (100),
wherein the method comprises:
- receiving at least one classification result (600) by the server (150) from the mobile, portable communication system (100), wherein the classification result (600) is based on the behavior of the user,
- analyzing the at least one classification result (600) according to a predetermined checking criterion (800) by the server in order to authenticate the user to the server (150),
- if the checking criterion is fulfilled and the user is considered authenticated, actuating the device (152) by means of a control signal by the server (150),
wherein the behavior-based authentication of the mobile, portable communication system (100) is carried out, which system comprises at least one sensor (110) for capturing gross-motor measured data (500), a gross-motor classification module (200), a processor (130), and an internal memory (120),
wherein the sensor (110) is designed for capturing the gross-motor measured data (500) of a gross-motor movement of a current user of the mobile, portable communication system (100),
wherein the gross-motor classification module (200) is trained to recognize a generic gross-motor movement pattern by means of training data sets of a user cohort, wherein the gross-motor classification module (200) is executed by the processor (130) of the mobile, portable communication system (100),
wherein the behavior-based authentication comprises the following steps:
a) repeatedly performing the following steps:
i. capturing the gross-motor measured data (500) by means of the at least one sensor (110) of the mobile, portable communication system (100), wherein the gross-motor measured data (500) are the movement data of the gross-motor movement of the current user,
ii. inputting the gross-motor measured data (500) into the gross-motor classification module (200),
iii. generating at least one first confidence value (540) by the gross-motor classification module (200),
iv. storing the at least one first confidence value (540) in the memory (120) of the mobile, portable communication system (100),
b) upon an authentication request, accessing the memory (120) of the mobile, portable communication system (100) in order to read out at least one of the stored first confidence values (540) from the memory (120),
c) generating the classification result (600) using the at least one first confidence value (540),
d) sending the classification result (600) to the server (150),
wherein at least one first pattern in the form of a first pattern function (210) and at least one first comparative data set (220) are stored in the memory (120) of the mobile, portable communication system (100),
wherein the first comparative data set (220) comprises a plurality of the gross-motor measured data (500), wherein at least one first comparative parameter (230) is calculated from the plurality of the gross-motor measured data (500) in the first comparative data set (220),
wherein the gross-motor classification module (200) performs the following steps when the gross-motor measured data (500) are input:
a) comparing the captured gross-motor measured data (500) with the at least one first pattern function (210),
b) assigning the gross-motor measured data (500) to the first pattern assigned to the first pattern function (210) and obtaining at least one first classification parameter (230) corresponding to the first pattern if the gross-motor measured data (500) can be assigned to the at least one first pattern,
c) calculating a confidence value (540) for each first classification parameter (230) by comparing the at least one first classification parameter (230) with the relevant first comparative parameter (230) of the first comparative data set (220),
wherein the gross-motor measured data (500) are stored in the memory of the mobile, portable communication system if the classification result resulting from the gross-motor measured data (500) has successfully contributed to authenticating the user, wherein the gross-motor measured data (500) are stored by the gross-motor measured data (500) being added to the first comparative data set (220),
wherein the first comparative parameter (230) is calculated again from the now-modified first comparative data set (220) in order for it to be possible to carry out the next authentication of the user with a current first comparative parameter (230).

2. Method (400) according to claim 1, wherein the mobile, portable communication system (100) comprises an application-behavior classification module (200),
wherein the application-behavior classification module (200) is executed by the processor (130) of the mobile, portable communication system (100),
wherein the behavior-based authentication further comprises:
a) repeatedly performing the following steps:
i. capturing application data (550),
ii. inputting the application data (550) into the application-behavior classification module (200),
iii. generating at least one second confidence value (540) by the application-behavior classification module (200),
iv. storing the at least one second confidence value (540) in the memory (120) of the mobile, portable communication system (100),
b) accessing the memory (120) of the mobile, portable communication system (100) in order to read out at least one of the stored second confidence values (540) from the memory (120),
wherein the at least one second confidence value (540) is used for generating the classification result (600),
wherein the application data (550) can preferably comprise:
- position data of the mobile, portable communication system (100), which are captured by a method for position determination by means of a sensor (110) for determining the position of the mobile, portable communication system (100), and/or
- application usage data for the current user (1), and/or
- biometric data for the current user (1), which are captured by a sensor (110) for capturing biometric data, and/or
- connection data for the mobile, portable communication system (100) to other devices and/or
- calendar and/or time data from a clock implemented in the mobile, portable communication system (100) or an external clock, the signal from which is received by a sensor (110) of the mobile, portable communication system (100).

3. Method (400) according to any of claims 1-2, wherein the mobile, portable communication system (100) comprises a fine-motor classification module (200),
wherein the fine-motor classification module (200) is configured for classification of fine-motor measured data (502) and is trained to recognize a fine-motor movement of a registered user, wherein the fine-motor classification module (200) is executed by the processor (130) of the mobile, portable communication system (100),
wherein the behavior-based authentication further comprises:
a) repeatedly performing the following:
i. capturing the fine-motor measured data (502),
ii. inputting the fine-motor measured data (502) into the fine-motor classification module (200),
iii. generating at least one third confidence value (540) by the fine-motor classification module (200),
iv. storing the at least one third confidence value (540) in the memory (120) of the mobile, portable communication system (100),
b) accessing the memory (120) of the mobile, portable communication system (100) in order to read out at least one of the stored third confidence values (540) from the memory (120),
wherein the at least one third confidence value (540) is also used for generating the classification result (600).

4. Method (400) according to any of claims 1-3, wherein the behavior-based authentication further comprises training the gross-motor classification module (200) using the gross-motor measured data (500) for the current user,
wherein the gross-motor classification module (200) is trained to the user-specific gross-motor movement pattern of the current user on the condition that, according to the classification result (600), the current user is the user registered in the mobile, portable communication system (100), and/or
training the application-behavior classification module (200) with the application data (550) for the current user (1), wherein the application-behavior classification module (200) is trained to the user-specific application-behavior pattern of the current user on the condition that, according to the classification result (600), the current user is the user registered in the system, and/or
training the fine-motor classification module (200) with the fine-motor measured data (502) for the current user (1), wherein the fine-motor classification module (200) is trained to the user-specific fine-motor movement pattern of the current user on the condition that, according to the classification result (600), the current user is the user registered in the system.

5. Method (400) according to any of claims 1-4, wherein the step of training includes adding the captured gross-motor measured data (500) to the first comparative data set (220).

6. Method (400) according to any of claims 2-5, wherein at least one second pattern in the form of a second pattern function (210) and at least one second comparative data set (220) are stored in the memory (120) of the mobile, portable communication system (100),
wherein the second comparative data set (220) comprises a plurality of the application data (550), wherein at least one second comparative parameter (230) is calculated from the plurality of the application data (550) in the second comparative data set (220),
wherein the application-behavior classification module (200) performs the following steps when the application data (550) are input:
a) comparing the captured application data (550) with the at least one second pattern function (210),
b) assigning the application data (550) to the second pattern assigned to the second pattern function (210) and obtaining at least one second classification parameter (520) corresponding to the second pattern if the application data (550) can be assigned to the at least one second pattern,
c) calculating a confidence value (540) for each of the second classification parameters (520) by comparing the second classification parameter (520) with the relevant second comparative parameter (520) of the second comparative data set (220),
and wherein the step of training includes adding the captured application data (550) to the second comparative data set (220).

7. Method (400) according to any of claims 3-6, wherein at least one third pattern in the form of a third pattern function (210) and at least one third comparative data set (220) are stored in the memory (120) of the mobile, portable communication system (100), wherein the third comparative data set (220) comprises values for at least one third comparative parameter (520), wherein the fine-motor classification module (200) performs the following steps when the fine-motor measured data (502) are input:
a) comparing the captured fine-motor measured data (502) with the at least one third pattern function (210),
b) assigning the fine-motor measured data (502) to the third pattern assigned to the third pattern function (210) and obtaining at least one third classification parameter (520) corresponding to the third pattern if the fine-motor measured data (502) can be assigned to the at least one third pattern,
c) calculating a confidence value (540) for each of the third classification parameters (520) by comparing the third classification parameter (520) with the relevant third comparative parameter (520) of the third comparative data set (220),
and wherein the step of training includes adding the captured fine-motor measured data (502) to the third comparative data set (220).

8. Method (400) according to any of claims 1-7, wherein the checking criterion (800) is fulfilled if:
- the at least one classification result (600) exceeds a threshold predetermined by the checking criterion (800) and/or
- a maximum age, predetermined by the checking criterion (800), of the at least one classification result (600) is not exceeded and/or
- there is a minimum number of classification results (600) that exceeds the threshold.

9. Method (400) according to any of claims 5-8, wherein the gross-motor measured data (500) which are part of the first comparative data set (220) and are older than a specified time are removed from the first comparative data set (220) and are deleted from the memory (120) of the mobile, portable communication system (100), and the application data (550) which are part of the second comparative data set (220) and are older than the specified time are removed from the second comparative data set (220) and are deleted from the memory (120) of the mobile, portable communication system (100), and the fine-motor measured data (502) which are part of the third comparative data set (220) and are older than the specified time are removed from the third comparative data set (220) and are deleted from the memory (120) of the mobile, portable communication system (100).

10. Method (400) according to any of the preceding claims, wherein the current user of the mobile, portable communication system (100) has to be authenticated to the server (150) after the mobile, portable communication system (100) is started up for the first time, and/or wherein, after being started up for the first time, the mobile, portable communication system (100) sends a signal to the current user which contains a request to personalize the mobile, portable communication system (100) by generating the at least one first and/or second and/or third comparative data set (220) by the current user.

11. Method (400) according to any of claims 2-10, wherein the at least one second confidence value (540) is only included when generating the classification result (600) if, in one of the preceding steps, the gross-motor classification module (200) has identified a gross-motor movement of the current user in the gross-motor measured data (500).

12. Method (400) according to any of claims 3-11, wherein the at least one third confidence value (540) is only included when analyzing the classification result (600) if, in one of the preceding steps, the gross-motor classification module (200) has recognized a gross-motor movement of the current user in the gross-motor measured data (500).

13. Method (400) according to any of claims 6-12, wherein the confidence values (540) are processed to form a resulting confidence value by the processor (130) of the mobile, portable communication system (100), wherein the resulting confidence value gives a probability of the identity of the current user matching the identity of the user registered in the mobile, portable communication system (100), and/or
wherein the individual confidence values (540) of the first, second and/or third classification parameters (520) are each provided with a weighting factor during the analysis, wherein the weighting factors are assigned to the relevant confidence value (540).

14. Method (400) according to any of claims 1-13, wherein a plurality of users are registered on the mobile, portable communication system (100) and a classification result (600) is generated for each user, wherein the mobile, portable communication system (100) comprises a user-recognition module, wherein the user-recognition module is configured to identify the current user as one of the registered users, wherein the user-recognition module is executed by the processor (130) of the mobile, portable communication system (100),
wherein the user-recognition module is preferably configured to recognize a change in user on the basis of a gross-motor and/or fine-motor movement,
wherein the user-recognition module is configured for a classification of the gross-motor measured data (500) and/or the fine-motor measured data (510) and is trained to recognize the gross-motor and/or fine-motor movement of the change in user of the mobile, portable communication system (100), wherein the user-recognition module is executed by the processor (130) of the mobile, portable communication system (100),
wherein the behavior-based authentication further comprises:
a) repeatedly performing the steps of:
- inputting the gross-motor measured data (500) and/or fine-motor measured data (510) into the user-recognition module,
- generating at least one fourth confidence value (600) by the user-recognition module,
- storing the at least one fourth confidence value (540) in the memory (120) of the mobile, portable communication system (100),
b) accessing the memory (120) of the mobile, portable communication system (100) in order to read out at least one of the stored fourth confidence values (540) from the memory (120),
c) analyzing the at least one fourth confidence value (540) in order to check whether a change in user has taken place,
d) discarding the previous confidence values (540) if a change in user has taken place.

15. Method (400) according to any of the preceding claims, wherein the server (150) and the mobile, portable communication system (100) communicate via a cryptographically secured wireless connection, and/or
wherein the server (150) and the device are communicatively interconnected via a network, and/or
wherein the method further comprises sending an authentication signal to the mobile, portable communication system (100) by the server.

16. System for authenticating (400) a current user of a mobile, portable communication system (100) to a server (150) by means of behavior-based authentication,
wherein the system comprises the mobile, portable communication system (100), the server (150), and at least one actuatable device (152),
wherein the server (150) comprises a first interface and a second interface, wherein the first interface is configured to communicate with at least one actuatable device (152) and the second interface is designed to communicate with a mobile, portable communication system (100),
wherein the system is configured to perform the following steps:
- receiving at least one classification result (600) by the server (150) from the mobile, portable communication system (100),
- analyzing the at least one classification result (600) according to a predetermined checking criterion (800) by the server,
- if the checking criterion is fulfilled and the user is considered authenticated, actuating the device (152) by means of a control signal by the server (150),
wherein the mobile, portable communication system (100) is configured to carry out the behavior-based authentication, wherein the mobile, portable communication system (100) comprises at least one sensor (110) for capturing gross-motor measured data (500), a gross-motor classification module (200), a processor (130), and an internal memory (120),
wherein the sensor (110) is designed for capturing the gross-motor measured data (500) of a gross-motor movement of a current user of the mobile, portable communication system (100),
wherein the gross-motor classification module (200) is trained to recognize a generic gross-motor movement pattern by means of training data sets of a user cohort, wherein the gross-motor classification module (200) is executed by the processor (130) of the mobile, portable communication system (100),
wherein the behavior-based authentication comprises the following steps:
e) repeatedly performing the following steps:
i. capturing the gross-motor measured data (500) by means of the at least one sensor (110) of the mobile, portable communication system (100), wherein the gross-motor measured data (500) are the movement data of the gross-motor movement of the current user,
ii. inputting the gross-motor measured data (500) into the gross-motor classification module (200),
iii. generating at least one first confidence value (540) by the gross-motor classification module (200),
iv. storing the at least one first confidence value (540) in the memory (120) of the mobile, portable communication system (100),
f) upon an authentication request, accessing the memory (120) of the mobile, portable communication system (100) in order to read out at least one of the stored first confidence values (540) from the memory (120),
g) generating the classification result (600) using the at least one first confidence value (540),
h) sending the classification result (600) to the server (150),
wherein at least one first pattern in the form of a first pattern function (210) and at least one first comparative data set (220) are stored in the memory (120) of the mobile, portable communication system (100),
wherein the first comparative data set (220) comprises a plurality of the gross-motor measured data (500), wherein at least one first comparative parameter (230) is calculated from the plurality of the gross-motor measured data (500) in the first comparative data set (220),
wherein the gross-motor classification module (200) performs the following steps when the gross-motor measured data (500) are input:
a) comparing the captured gross-motor measured data (500) with the at least one first pattern function (210),
b) assigning the gross-motor measured data (500) to the first pattern assigned to the first pattern function (210) and obtaining at least one first classification parameter (230) corresponding to the first pattern if the gross-motor measured data (500) can be assigned to the at least one first pattern,
c) calculating a confidence value (540) for each first classification parameter (230) by comparing the at least one first classification parameter (230) with the relevant first comparative parameter (230) of the first comparative data set (220),
wherein the gross-motor measured data (500) are stored in the memory of the mobile, portable communication system if the classification result resulting from the gross-motor measured data (500) has successfully contributed to authenticating the user, wherein the gross-motor measured data (500) are stored by the gross-motor measured data (500) being added to the first comparative data set (220),
wherein the first comparative parameter (230) is calculated again from the now-modified first comparative data set (220) in order for it to be possible to carry out the next authentication of the user with a current first comparative parameter (230).

17. System for authentication (400) according to claim 16, wherein the server (150) and the mobile, portable communication system (100) communicate via a cryptographically secured wireless connection.

## Revendications

1. Procédé d'authentification (400) d'un utilisateur actuel d'un système de communication (100) mobile portable vis-à-vis d'un serveur (150) au moyen d'une authentification basée sur le comportement,
dans lequel le serveur (150) présente une première interface et une deuxième interface, où la première interface est conçue avec au moins un dispositif (152) pouvant être commandé pour la communication et la deuxième interface est conçue pour communiquer avec un système de communication (100) mobile portable,
le procédé comprenant :
- la réception d'au moins un résultat de classification (600) par le serveur (150) du système de communication (100) mobile portable, où le résultat de classification (600) est basé sur le comportement de l'utilisateur,
- l'évaluation de l'au moins un résultat de classification (600) en fonction d'un critère de vérification (800) prédéfini par le serveur, afin d'authentifier l'utilisateur vis-à-vis du serveur (150),
- dans le cas où le critère de vérification est satisfait et que l'utilisateur est authentifié, la commande du dispositif (152) au moyen d'un signal de commande par le serveur (150),
dans lequel l'authentification basée sur le comportement est exécutée par le système de communication (100) mobile portable, lequel présente au moins un capteur (110) pour la détection de données de mesure de mobilité grossière (500), un module de classification de mobilité grossière (200), un processeur (130) et une mémoire interne (120),
dans lequel le capteur (110) est conçu pour la détection des données de mesure de motricité grossière (500) d'un mouvement de mobilité grossière d'un utilisateur actuel du système de communication (100) mobile portable,
dans lequel le module de classification de motricité grossière (200) est entraîné pour la reconnaissance d'un modèle de mouvement de motricité grossière générique à l'aide d'ensembles de données d'entraînement d'une cohorte d'utilisateurs, où le module de classification de motricité grossière (200) est exécuté par le processeur (130) du système de communication (100) mobile portable,
dans lequel l'authentification basée sur le comportement présente les étapes suivantes :
a) l'exécution répétée des étapes suivantes :
i. la détection des données de mesure de motricité grossière (500) par l'au moins un capteur (110) du système de communication (100) mobile portable, où les données de mesure de motricité grossière (500) sont les données de déplacement du mouvement de motricité grossière de l'utilisateur actuel,
ii. la saisie des données de mesure de motricité grossière (500) dans le module de classification de motricité grossière (200),
iii. la génération d'au moins une première valeur de confiance (540) par le module de classification de motricité grossière (200),
iv. l'enregistrement de l'au moins une première valeur de confiance (540) dans la mémoire (120) du système de communication (100) mobile portable,
b) suite à une demande d'authentification, l'accès à la mémoire (120) du système de communication (100) mobile portable afin de lire au moins une des premières valeurs de confiance (540) enregistrées à partir de la mémoire (120),
c) la génération du résultat de classification (600) moyennant l'emploi de l'au moins une première valeur de confiance (540),
d) l'envoi du résultat de classification (600) au serveur (150),
dans lequel au moins un premier modèle sous la forme d'une première fonction modèle (210) et au moins un premier ensemble de données de comparaison (220) sont enregistrés dans la mémoire (120) du système de communication (100) mobile portable,
dans lequel le premier ensemble de données de comparaison (220) comprend une multiplicité de données de mesure de motricité grossière (500), où au moins un premier paramètre de comparaison (230) est calculé à partir de la multiplicité des données de mesures de motricité grossière (500) du premier ensemble de données de comparaison (220),
dans lequel le module de classification de motricité grossière (200), suite à l'entrée des données de mesure de motricité grossière (500), effectue les étapes suivantes :
a) la comparaison des données de mesure de motricité grossière (500) détectées avec l'au moins une première fonction modèle (210),
b) l'association des données de mesure de motricité grossière (500) au premier modèle associé à la première fonction modèle (210) et l'obtention d'au moins un premier paramètre de classification (230) correspondant au premier modèle dans le cas où les données de mesure de motricité grossière (500) peuvent être associées à l'au moins un premier modèle,
c) le calcul d'une valeur de confiance (540) pour chaque premier paramètre de classification (230) par une comparaison de l'au moins un premier paramètre de classification (230) avec le premier paramètre de comparaison (230) respectif du premier ensemble de données de comparaison (220),
dans lequel les données de mesure de motricité grossière (500) sont enregistrées dans la mémoire du système de communication mobile portable lorsque le résultat de classification résultant des données de mesure de motricité grossière (500) a contribué avec succès à l'authentification de l'utilisateur, où l'enregistrement des données de mesure de motricité grossière (500) a lieu par le fait que les données de mesure de motricité grossière (500) sont ajoutées au premier ensemble de données de comparaison (220),
dans lequel le premier paramètre de comparaison (230) est de nouveau calculé à partir du premier ensemble de données de comparaison (220) venant d'être modifié afin de pouvoir exécuter une authentification suivante de l'utilisateur avec un premier paramètre de comparaison (230) actuel.

2. Procédé (400) selon la revendication 1, dans lequel le système de communication (100) mobile portable présente un module de classification de comportements d'applications (200),
dans lequel le module de classification de comportements d'applications (200) est exécuté par le processeur (130) du système de communication (100) mobile portable,
dans lequel l'authentification basée sur le comportement comprend en outre :
a) l'exécution répétée des étapes suivantes :
i. la détection de données d'application (550),
ii. la saisie des données d'application (550) dans le module de classification de comportements d'applications (200),
iii. la génération d'au moins une deuxième valeur de confiance (540) par le module de classification de comportements d'applications (200),
iv. l'enregistrement de l'au moins une deuxième valeur de confiance (540) dans la mémoire (120) du système de communication (100) mobile portable,
b) l'accès à la mémoire (120) du système de communication (100) mobile portable afin de lire au moins une des deuxièmes valeurs de confiance (540) enregistrées à partir de la mémoire (120),
dans lequel l'au moins une deuxième valeur de confiance (540) est employée pour la génération du résultat de classification (600),
dans lequel les données d'application (550) peuvent de préférence comprendre :
- des données de position du système de communication (100) mobile portable, lesquelles ont été détectées par un procédé de détermination de position par un capteur (110) pour la détermination de la position du système de communication (100) mobile portable, et/ou
- des données d'utilisation d'applications de l'utilisateur (1) actuel, et/ou
- des données biométriques de l'utilisateur (1) actuel, lesquelles sont détectées par un capteur (110) de détection de données biométriques, et/ou
- des données de liaison du système de communication (100) mobile portable avec d'autres appareils, et/ou
- des données calendaires et/ou horaires d'une horloge mise en oeuvre dans le système de communication (100) mobile portable ou d'une horloge externe dont le signal est reçu par un capteur (110) du système de communication (100) mobile portable.

3. Procédé (400) selon l'une des revendications 1 ou 2, dans lequel le système de communication (100) mobile portable présente un module de classification de motricité fine (200),
dans lequel le module de classification de motricité fine (200) est conçu pour une classification de données de mesure de motricité fine (502) et est entraîné pour la reconnaissance d'un mouvement de motricité fine d'un utilisateur enregistré, où le module de classification de motricité fine (200) est exécuté par le processeur (130) du système de communication (100) mobile portable,
dans lequel l'authentification basée sur le comportement présente en outre :
a) l'exécution répétée de ce qui suit :
i. la détection des données de mesure de motricité fine (502),
ii. la saisie des données de mesure de motricité fine (502) dans le module de classification de motricité fine (200),
iii. la génération d'au moins une troisième valeur de confiance (540) par le module de classification de motricité fine (200),
iv. l'enregistrement de l'au moins une troisième valeur de confiance (540) dans la mémoire (120) du système de communication (100) mobile portable,
b) l'accès à la mémoire (120) du système de communication (100) mobile portable afin de lire au moins une des troisièmes valeurs de confiance (540) enregistrées à partir de la mémoire (120),
dans lequel l'au moins une troisième valeur de confiance (540) est également employée pour la génération du résultat de classification (600).

4. Procédé (400) selon l'une des revendications 1 à 3, dans lequel l'authentification basée le comportement comprend en outre l'entraînement du module de classification de motricité grossière (200) avec les données de mesure de motricité grossière (500) de l'utilisateur actuel,
dans lequel le module de classification de motricité grossière (200) est entraîné d'après le modèle de mouvement de motricité grossière spécifique à l'utilisateur de l'utilisateur actuel à la condition que l'utilisateur actuel, selon le résultat de classification (600), est l'utilisateur enregistré dans le système de communication (100) mobile portable, et/ou
l'entraînement du module de classification de comportements d'applications (200) avec les données d'application (550) de l'utilisateur (1) actuel, où le module de classification de comportements d'applications (200) est entraîné d'après le modèle de comportement d'application spécifique pour l'utilisateur de l'utilisateur actuel à condition que l'utilisateur actuel, selon le résultat de classification (600), est l'utilisateur enregistré dans le système, et/ou
l'entrainement du module de classification de motricité fine (200) avec les données de mesure de motricité fine (502) de l'utilisateur (1) actuel, où le module de classification de motricité fine (200) est entraîné d'après le modèle de mouvement de motricité fine spécifique à l'utilisateur de l'utilisateur actuel à condition que l'utilisateur actuel, selon le résultat de classification (600), est l'utilisateur enregistré dans le système.

5. Procédé (400) selon l'une des revendications 1 à 4, dans lequel l'étape d'entraînement comprend l'ajout des données de mesure de motricité grossière (500) détectées au premier ensemble de données de comparaison (220).

6. Procédé (400) selon l'une des revendications 2 à 5, dans lequel au moins un deuxième modèle sous la forme d'une deuxième fonction modèle (210) et au moins un deuxième ensemble de données de comparaison (220) sont enregistrés dans la mémoire (120) du système de communication (100) mobile portable,
dans lequel le deuxième ensemble de données de comparaison (220) comprend une multiplicité de données d'applications (550), où au moins un deuxième paramètre de comparaison (230) est calculé à partir de la multiplicité des données d'applications (550) du deuxième ensemble de données de comparaison (220),
dans lequel le module de classification de comportements d'applications (200), suite à l'entrée des données d'application (550), effectue les étapes suivantes :
a) la comparaison des données d'applications (550) détectées avec l'au moins une deuxième fonction modèle (210),
b) l'association des données d'applications (550) au deuxième modèle associé à la deuxième fonction modèle (210) et l'obtention d'au moins un deuxième paramètre de classification (520) correspondant au deuxième modèle dans le cas où les données d'applications (550) peuvent être associées à l'au moins un deuxième modèle,
c) le calcul d'une valeur de confiance (540) pour chacun des deuxièmes paramètres de classification (520) par une comparaison de l'au moins un deuxième paramètre de classification (520) avec le deuxième paramètre de comparaison (520) respectif du deuxième ensemble de données de comparaison (220),
et dans lequel l'étape d'entraînement comprend un ajout des données d'applications (550) détectées au deuxième ensemble de données de comparaison (220).

7. Procédé (400) selon l'une des revendications 3 à 6, dans lequel au moins un troisième modèle sous la forme d'une troisième fonction modèle (210) et au moins un troisième ensemble de données de comparaison (220) sont enregistrés dans la mémoire (120) du système de communication (100) mobile portable, dans lequel le troisième ensemble de données de comparaison (220) comprend des données pour au moins un troisième paramètre de comparaison (520), dans lequel le module de classification de motricité fine (200), suite à l'entrée des données de mesure de motricité fine (502), effectue les étapes suivantes :
a) la comparaison des données de mesure de motricité fine (502) détectées avec l'au moins une troisième fonction modèle (210),
b) l'association des données de mesure de motricité fine (502) au troisième modèle associé à la troisième fonction modèle (210) et l'obtention d'au moins un troisième paramètre de classification (520) correspondant au troisième modèle dans le cas où les données de mesure de motricité fine (502) peuvent être associées à l'au moins un troisième modèle,
c) le calcul d'une valeur de confiance (540) pour chacun des troisièmes paramètres de classification (520) par une comparaison de l'au moins un troisième paramètre de classification (520) avec le troisième paramètre de comparaison (520) respectif du troisième ensemble de données de comparaison (220),
et dans lequel l'étape d'entraînement comprend un ajout des données de mesure de motricité fine (502) détectées au troisième ensemble de données de comparaison (220).

8. Procédé (400) selon l'une des revendications 1 à 7, dans lequel le critère de vérification (800) est satisfait dans le cas où :
- l'au moins un résultat de classification (600) dépasse une valeur limite prédéfinie par le critère de vérification (800), et/ou
- un vieillissement maximal prédéfini par le critère de vérification (800) de l'au moins un résultat de classification (600) ne doit pas être dépassé, et/ou
- un nombre minimal de résultats de classifications (600), lesquelles dépasse la valeur limite, est atteint.

9. Procédé (400) selon l'une des revendications 5 à 8, dans lequel les données de mesure de motricité grossière (500), lesquelles font partie du premier ensemble de données de comparaison (220) et sont plus âgées qu'une durée fixée, sont retirées du premier ensemble de données de comparaison (220) et sont effacées de la mémoire (120) du système de communication (100) mobile portable et les données d'application (550), lesquelles font partie du deuxième ensemble de données de comparaison (220) et sont plus âgées que la durée fixée, sont retirées du deuxième ensemble de données de comparaison (220) et sont effacées de la mémoire (120) du système de communication (100) portable mobile, et les données de mesure de motricité fine (502), lesquelles font partie du troisième ensemble de données de comparaison (220) et sont plus âgées que la durée fixée, sont enlevées du troisième ensemble de données de comparaison (220) et sont effacées de la mémoire (120) du système de communication (100) mobile portable.

10. Procédé (400) selon l'une des revendications précédentes, dans lequel l'utilisateur actuel du système de communication (100) mobile portable doit s'authentifier vis-à-vis du serveur (150) après une ouverture de session du système de communication (100) mobile portable, et/ou
dans lequel le système de communication (100) mobile portable envoie un signal à l'utilisateur actuel après l'ouverture de session, lequel contient une incitation à une personnalisation du système de communication (100) mobile portable par une génération de l'au moins un premier et/ou un deuxième et/ou un troisième ensemble de données de comparaison (220) par l'utilisateur actuel.

11. Procédé (400) selon l'une des revendications 2 à 10, dans lequel, lors de la génération du résultat de classification (600), l'au moins une deuxième valeur de confiance (540) n'est impliquée que si, dans une des étapes précédentes, le module de classification de motricité grossière (200) a reconnu un mouvement de motricité grossière de l'utilisateur actuel dans les données de mesure de motricité grossière (500).

12. Procédé (400) selon l'une des revendications 3 à 11, dans lequel, lors de l'évaluation du résultat de classification (600), l'au moins troisième valeur de confiance (540) n'est impliquée que si le module de classification de motricité grossière (200) a reconnu un mouvement de motricité grossière de l'utilisateur actuel dans les données de mesure de motricité grossière (500) dans une des étapes précédentes.

13. Procédé (400) selon l'une des revendications 6 à 12, dans lequel les valeurs de confiance (540) sont traitées pour donner une valeur de confiance résultante par le processeur (130) du système de communication (100) mobile portable, où la valeur de confiance résultante indique une probabilité avec laquelle l'identité de l'utilisateur actuel correspond à l'identité de l'utilisateur enregistré dans le système de communication (100) mobile portable, et/ou
dans lequel les valeurs de confiance (540) individuelles des premier, deuxième et/ou troisième paramètres de classification (520) sont pourvues respectivement d'un facteur de pondération, où les facteurs de pondération sont associés à la valeur de confiance (540) respective.

14. Procédé (400) selon l'une des revendications 1 à 13, dans lequel plusieurs utilisateurs sont enregistrés sur le système de communication (100) mobile portable et un résultat de classification (600) est généré pour chaque utilisateur, où le système de communication (100) mobile portable présente un module de reconnaissance d'utilisateur, où le module de reconnaissance d'utilisateur est conçu pour identifier l'utilisateur actuel en tant qu'utilisateur enregistré, où le module de reconnaissable d'utilisateur est exécuté par le processeur (130) du système de communication (100) mobile portable.
dans lequel le module de reconnaissance d'utilisateur est de préférence conçu pour reconnaitre un échange d'utilisateurs à l'aide d'un mouvement de motricité grossière et/ou fine,
dans lequel le module de reconnaissance d'utilisateur est conçu pour une classification des données de mesure de motricité grossière (500) et/ou de données de mesure de motricité fine (510) et est entraîné pour une reconnaissance du mouvement de motricité grossière et/ou fine de l'échange d'utilisateurs du système de communication (100) mobile portable, où le module de reconnaissance d'utilisateur est exécuté par le processeur (130) du système de communication (100) mobile portable,
dans lequel l'authentification basée sur le comportement comprend en outre :
a) l'exécution répétée des étapes :
- l'entrée des données de mesure de motricité grossière (500) et/ou des données de mesure de motricité fine (510) dans le module de reconnaissance d'utilisateur,
- la génération d'au moins une quatrième valeur de confiance (600) par le module de reconnaissance d'utilisateur,
- l'enregistrement de l'au moins une quatrième valeur de confiance (540) dans la mémoire (120) du système de communication (100) mobile portable,
b) l'accès à la mémoire (120) du système de communication (100) mobile portable afin de lire au moins une des quatrièmes valeurs de confiance (540) enregistrées à partir de la mémoire (120),
c) l'évaluation de l'au moins une quatrième valeur de confiance (540) afin de vérifier si un échange d'utilisateurs a eu lieu,
d) le rejet des valeurs de confiances antérieures (540) dans le cas où il y a eu un échange d'utilisateur.

15. Procédé (400) selon l'une des revendications précédentes, dans lequel le serveur (150) et le système de communication (100) mobile portable communiquent par le biais d'une connexion sans fil protégée de manière cryptographique, et/ou
dans lequel le serveur (150) et le dispositif sont reliés ensemble de manière communicative par le biais d'un réseau, et/ou
le procédé comprenant en outre l'envoi d'un signal d'authentification au système de communication (100) mobile portable par le serveur.

16. Système d'authentification (400) d'un utilisateur actuel d'un système de communication (100) mobile portable vis-à-vis d'un serveur (150) au moyen d'une authentification basée sur le comportement,
le système comprenant le système de communication (100) mobile portable, le serveur (150) et au moins un dispositif (152) pouvant être commandé,
dans lequel le serveur (150) présente une première interface et une deuxième interface, où la première interface est conçue pour communiquer avec l'au moins un dispositif (152) pouvant être commandé et la deuxième interface est conçue pour communiquer avec un système de communication (100) mobile portable,
le système étant conçu pour exécuter les étapes suivantes :
- la réception d'au moins un résultat de classification (600) par le serveur (150) du système de communication (100) mobile portable,
- l'évaluation de l'au moins un résultat de classification (600) en fonction d'un critère de vérification (800) prédéfini par le serveur,
- dans le cas où le critère de vérification est satisfait et que l'utilisateur est authentifié, la commande du dispositif (152) au moyen d'un signal de commande par le serveur (150),
dans lequel le système de communication (100) mobile portable est conçu pour exécuter l'authentification basée sur le comportement, où le système de communication (100) mobile portable présente au moins un capteur (110) pour la détection de données de mesure de mobilité grossière (500), un module de classification de mobilité grossière (200), un processeur (130) et une mémoire interne (120),
dans lequel le capteur (110) est conçu pour la détection des données de mesure de motricité grossière (500) d'un mouvement de mobilité grossière d'un utilisateur actuel du système de communication (100) mobile portable,
dans lequel le module de classification de motricité grossière (200) est entraîné pour la reconnaissance d'un modèle de mouvement de motricité grossière générique à l'aide d'ensembles de données d'entraînement d'une cohorte d'utilisateurs, où le module de classification de motricité grossière (200) est exécuté par le processeur (130) du système de communication (100) mobile portable,
dans lequel l'authentification basée sur le comportement présente les étapes suivantes :
a) l'exécution répétée des étapes suivantes :
i. la détection des données de mesure de motricité grossière (500) par l'au moins un capteur (110) du système de communication (100) mobile portable, où les données de mesure de motricité grossière (500) sont les données de déplacement du mouvement de motricité grossière de l'utilisateur actuel,
ii. la saisie des données de mesure de motricité grossière (500) dans le module de classification de motricité grossière (200),
iii. la génération d'au moins une première valeur de confiance (540) par le module de classification de motricité grossière (200),
iv. l'enregistrement de l'au moins une première valeur de confiance (540) dans la mémoire (120) du système de communication (100) mobile portable,
f) suite à une demande d'authentification, l'accès à la mémoire (120) du système de communication (100) mobile portable afin de lire au moins une des premières valeurs de confiance (540) enregistrées à partir de la mémoire (120),
g) la génération du résultat de classification (600) moyennant l'emploi de l'au moins une première valeur de confiance (540),
h) l'envoi du résultat de classification (600) au serveur (150),
dans lequel au moins un premier modèle sous la forme d'une première fonction modèle (210) et au moins un premier ensemble de données de comparaison (220) sont enregistrés dans la mémoire (120) du système de communication (100) mobile portable,
dans lequel le premier ensemble de données de comparaison (220) comprend une multiplicité de données de mesure de motricité grossière (500), où au moins un premier paramètre de comparaison (230) est calculé à partir de la multiplicité des données de mesures de motricité grossière (500) du premier ensemble de données de comparaison (220),
dans lequel le module de classification de motricité grossière (200), suite à l'entrée des données de mesure de motricité grossière (500), effectue les étapes suivantes :
a) la comparaison des données de mesure de motricité grossière (500) détectées avec l'au moins une première fonction modèle (210),
b) l'association des données de mesure de motricité grossière (500) au premier modèle associé à la première fonction modèle (210) et l'obtention d'au moins un premier paramètre de classification (230) correspondant au premier modèle dans le cas où les données de mesure de motricité grossière (500) peuvent être associées à l'au moins un premier modèle,
c) le calcul d'une valeur de confiance (540) pour chaque premier paramètre de classification (230) par une comparaison de l'au moins un premier paramètre de classification (230) avec le premier paramètre de comparaison (230) respectif du premier ensemble de données de comparaison (220),
dans lequel les données de mesure de motricité grossière (500) sont enregistrées dans la mémoire du système de communication mobile portable lorsque le résultat de classification résultant des données de mesure de motricité grossière (500) a contribué avec succès à l'authentification de l'utilisateur, où l'enregistrement des données de mesure de motricité grossière (500) a lieu par le fait que les données de mesure de motricité grossière (500) sont ajoutées au premier ensemble de données de comparaison (220),
dans lequel le premier paramètre de comparaison (230) est de nouveau calculé à partir du premier ensemble de données de comparaison (220) venant d'être modifié afin de pouvoir exécuter une authentification suivante de l'utilisateur avec un premier paramètre de comparaison (230) actuel.

17. Système d'authentification (400) selon la revendication 16, dans lequel le serveur (150) et le système de communication (100) mobile portable communiquent par le biais d'une connexion sans fil protégé de manière cryptographique.
